# EUROPEAN PATENT SPECIFICATION

(11) **EP 2 324 529 B1**
(45) Date of publication and mention of the grant of the patent: **13.01.2016**
(21) Application number: 09778179.3
(22) Date of filing: 28.08.2009
(51) Int. Cl.: H01M 8/10, C08G 75/23, C08J 5/22, C08L 81/06

(54) **PROTON EXCHANGE MEMBRANE FOR USE IN PROTON EXCHANGE MEMBRANE FUEL CELLS**
PROTONENAUSTAUSCHERMEMBRAN ZUR VERWENDUNG IN PROTONENAUSTAUSCHERMEMBRAN-BRENNSTOFFZELLEN
MEMBRANE ÉCHANGEUSE DE PROTONS DESTINÉE À ÊTRE UTILISÉE DANS DES PILES À COMBUSTIBLE À MEMBRANE ÉCHANGEUSE DE PROTONS

(30) Priority: 29.08.2008 WO PCT/EP2008/007083
(43) Date of publication of application: 25.05.2011
(73) Proprietor: EWE-Forschungszentrum für Energietechnologie E.V., 26129 Oldenburg (DE)
(72) Inventor: HU, Jin, 26129 Oldenburg (DE)
(74) Representative: Lemcke, Brommer & Partner Patentanwälte Partnerschaft mbB
(86) International application number: PCT/EP2009/006248
(87) International publication number: WO 2010/022963

(56) References cited:
- US-A- 4 814 399
- US-A- 5 599 639
- LI Q ET AL: "APPROACHES AND RECENT DEVELOPMENT OF POLYMER ELECTROLYTE MEMBRANES FOR FUEL CELLS OPERATING ABOVE 100 DEG C" CHEMISTRY OF MATERIALS, AMERICAN CHEMICAL SOCIETY, WASHINGTON, US, vol. 15, no. 26, 12 September 2003 (2003-09-12), pages 4896-4915, XP008040177 ISSN: 0897-4756

## Description

The present invention relates to proton exchange membranes for use in proton exchange membrane fuel cells, in particular in high temperature polymer electrolyte membrane fuel cells (PEMFC) and direct methanol fuel cells (DMFC), comprising sulfonated polybenzimidazole polymers; and to methods for the production of such proton exchange membranes. Moreover, the present invention relates to proton exchange membrane fuel cells, comprising such proton exchange membranes.

Fuel cells are efficient devices that generate electric power via chemical reaction of fuels (e.g. hydrogen or methanol) and oxygen-containing gas. Fuel cells may be classified according to the electrolyte used in the fuel cell. The types of fuel cells include polymer electrolyte membrane fuel cells (PEMFC), direct methanol fuel cells (DMFC), phosphoric acid fuel cells (PAFC), molten carbonate fuel cells (MCFC), and solid oxide fuel cells (SOFC). The working temperatures of the fuel cells and their constitute materials vary depending on the type of electrolyte used in a cell.

The basic PEMFC and DMFC include an anode (fuel electrode), a cathode (oxidizing agent electrode), and a polymer electrolyte membrane (hereinafter also referred to as proton exchange membrane) intermediated between the anode and the cathode. The anode includes a catalyst layer to promote the oxidation of a fuel, and the cathode includes a catalyst layer to promote the reduction of an oxidizing agent. Examples of fuel that may be supplied to the anode include hydrogen, a hydrogen-containing gas, a mixture of methanol vapor and water vapor, and an aqueous methanol solution. Examples of the oxidizing agent supplied to the cathode include oxygen, oxygen containing gas, and air.

The polymer electrolyte membrane acts as an ionic conductor for the migration of protons from the anode to the cathode and also acts as a separator for preventing contact between the anode and the cathode. Therefore, the polymer electrolyte membrane properties should include sufficient ionic conductivity, electrochemical safety properties, high mechanical strength, thermal stability at the operating temperature of the fuel cell, and should be easily formed into a thin layer.

The up-to-date PEMFC and DMFC technology is based on sulfonated polymer membranes (e.g., Nafion^{®}) as the electrolyte. Sulfonated polymers exhibit generally good chemical stability and proton conductivity at high relative humidity and low temperature. However, the presence of liquid water limits the operational temperature of PEMFC and DMFC to below 100 °C under atmospheric pressure, typically around 80 °C, since the proton is conducted by the assistance of liquid water (proton solvent) in the sulfonated polymer membranes. Furthermore, for both PEMFC and DMFC, they have the disadvantage of the cost of materials (namely the noble metal catalysts and the perfluorosulfonic membrane), and the cost of the affiliated system which are presently higher with respect to conventional energy conversion systems. In addition, DMFC presently suffer from methanol crossover across polymer electrolyte membranes and poor methanol electro-oxidation kinetics at low temperature on Pt-based anode catalysts.

It is expected that most of the shortcomings associated with the low-temperature PEMFC and DMFC technology could be partly solved or avoided by operating at high temperatures, i.e. in particular above 100 °C. Potential advantages include the following: (1) enhanced kinetics for both electrode reactions, which is of special importance for the direct oxidation of methanol in DMFC; (2) enhanced CO tolerance, making it possible for a PEMFC to use hydrogen directly from a simple reformer, so that the affiliate component can be eliminated from the fuel processing system; (3) simple cooling system due to the increased temperature gradient between the fuel cell stack and the coolant and a simplified water management system due to the high operation temperature (generally above the water boiling point), thereby significantly improving the overall system efficiency. Moreover, high reliability, less maintenance, and better transient response capacities can also be expected as the potential advantages of the high-temperature PEMFC technology.

Various methods have been proposed to raise the operating temperature of a PEMFC to 100 °C or higher, including a method providing a PEMFC with a humidification apparatus, and a method operating under pressurized conditions. When a PEMFC is operated under pressurized conditions, the boiling point of water increases, such that the operating temperature can be rasied. But the use of a pressurizing system or a humidification apparatus increases the size and weight of the PEMFC, and reduces the efficiency of the power generating system.

Consequently, the availability of proton conducting membranes retaining satisfactory conductivity at high temperature (typically 100-200 °C) without humidification could permit the realization of PEMFC and DMFC which are of special interest for the co-generation stationary power plant application and electric vehicle.

The poor proton conductivity of sulfonated polymer membranes at high temperature (typically 100 °C or more, e.g. 100-200 °C) is mainly due to the loss of water (which acts as proton solvent). Therefore, a feasible approach to sulfonated polymer membranes (which act as a proton donor) suitable for high temperature PEMFC and DMFC operation could be e.g. providing sulfonated polymer membranes with insoluble and nonvolatile material, which can act as proton solvents (proton acceptor) similar to water. The most effective proton solvent besides water is imidazole (Im), containing both proton donor group (NH) and acceptor group (N). The mechanism for the proton transport of Im is shown below:

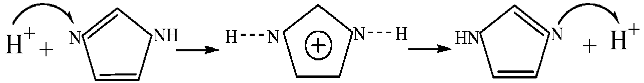

However, imidazole, benzimidazole and other compounds containing an Im moiety as side chain are highly water soluble. Therefore, they will be leached out from the membrane and poison the catalyst, which makes them impossible for practical use in fuel cells, be it at low or high operation temperature.

The newest technology in this field, providing insoluble and nonvolatile sulfonated polymer to be used as a membrane material, is based on polybenzimidazole (PBI, Celazole™ from Hoechst Celanese), the chemical structure of which is shown below:

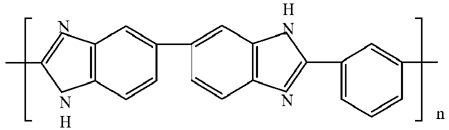

PBI is a water-insoluble polymer, and it contains the Im cycles in the polymer chain. The excellent chemical and thermal stability of PBI allows for facilitated application in high temperature fuel cells. For an overview on PBI and related polymers, see e.g. Deborah J. Jones and Jacques Rozière, J. Membrane Science, Vol. 185, Issue 1, 2001, pages 41-58*.*

In addition, it is known that the Im moiety can be grafted with sulfonic groups, since the NH group in the Im ring is active to a certain degree. Thus, sulfonated PBI polymers have been provided by a two-step preparation method comprising (1) activation of PBI using an alkali metal hydride, followed by (2) reaction with arylsulfonates, as described e.g. by Melinda B.Gieselman and John R. Reynolds, Macromolecules, Vol. 25, 1992, p. 4832-4834, and the literature cited there; and by Sansone et al. in US 4,814,399.

It was shown that alkylsulfonated PBI membranes, having a degree of substitution (e.g. with propanesulfone substituents) of 73.1 mol-%, maintain a significant proton conductivity at temperatures above 100 °C under humidified state, i.e. in the presence of a significant amount of water, as is described by Qingfeng Li et al., Chem. Mater., Vol. 15, No. 26, 2003, p. 4906*, right col., 1. par.,* and the literature cited there. Such alkylsulfonated PBI membranes may be useful for low-temperature fuel cell application. However, known alkylsulfonated PBI membranes for use in conventional low-temperature fuel cell application (such as PEMFC) require humidification of the reactant gas in order to achieve desired single cell performance.

Therefore, it is an object of the present invention to provide a modified PBI-based membrane with a good proton conductivity at high temperature of 100 °C and above, which at least partially overcomes the drawbacks of the prior art. Such polymer electrolyte membrane / proton exchange membrane should be easily formed into a thin layer for use in proton exchange membrane fuel cells, in particular in high temperature polymer electrolyte membrane fuel cells (PEMFC) and direct methanol fuel cells (DMFC). Additionally, membrane properties should include high mechanical strength and/or thermal stability at the operating temperature of the fuel cell. Another aspect is that sufficient electrochemical safety properties are required.

The above object(s) is(are) solved by the use of a proton exchange membrane according to claim 1. The proton exchange membrane comprises at least one partly-sulfonated polybenzimidazole polymer ps-PBI, for use in proton exchange membrane fuel cells which may be operated at high temperature of 100 °C or more, and at low or very low water content, which is also referred to as a state where the membrane is essentially free of water.

The invention is described more fully hereinafter with reference to general and specific embodiments. This invention may, however, be embodied in many different forms and should not be construed as limited to the embodiments set forth herein. Rather, these embodiments are provided so that this disclosure is thorough, and will fully convey the scope of the invention to those skilled in the art. Additional features of the invention will be set forth in the description which follows, and in part will be apparent from the description, or may be learned by practice of the invention. It is to be understood that both the foregoing general description and the following detailed description are exemplary and explanatory and are intended to provide further explanation of the invention as claimed.

In a first aspect, therefore, the present invention relates to a proton exchange membrane M for use in proton exchange membrane fuel cells, in particular in high temperature polymer electrolyte membrane fuel cells (PEMFC) and direct methanol fuel cells (DMFC), comprising at least one, i.e. one or more, e.g. one, two or three, partly-sulfonated polybenzimidazole polymer(s) ps-PBI which comprise(s), in polymerized form, at least 90 mol-%, preferably at least 95 mol-%, and particularly preferred at least 99 mol-% monomeric units U of formula (I) and/or (II), based on the total amount of monomeric units in the partly-sulfonated polybenzimidazole polymer ps-PBI, 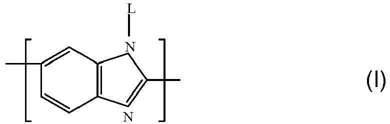 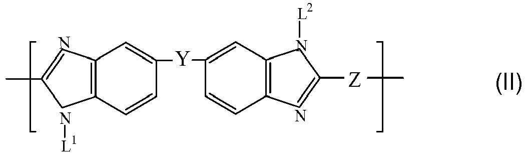 wherein L, L¹ and L² are selected independently for each of the monomeric units U and are selected, independently from one another, from the group consisting of hydrogen and -A-SO₃H, wherein
- A: is selected from the group consisting of divalent C₁-C₁₀ alkanediyl, preferably C₁-C₆ alkanediyl, and more preferably C₁-C₄ alkanediyl; divalent C₁-C₁₀ fluoroalkanediyl, preferably C₁-C₆ fluoroalkanediyl, and more preferably C₁-C₄ fluoroalkanediyl; and divalent C₇-C₁₅ arylalkyl, preferably C₇-C₁₂ arylalkyl, and more preferably C₇-C₁₀ arylalkyl;
- Y: is selected from the group consisting of O and S, or Y is a single carbon-carbon bond; preferably Y is O or a single carbon-carbon bond;
- Z: is selected from the group consisting of divalent C₁-C₁₀ alkanediyl, preferably C₁-C₆ alkanediyl, and more preferably C₁-C₄ alkanediyl; divalent C₂-C₁₀ alkenediyl; preferably C₂-C₆ alkenediyl, and more preferably C₂-C₄ alkenediyl; divalent C₆-C₁₅ aryl, preferably C₆-C₁₂ aryl; divalent C₅-C₁₅ heteroaryl, preferably C₅-C₁₂ heteroaryl; divalent C₅-C₁₅ heterocyclyl; preferably divalent C₅-C₁₂ heterocyclyl; divalent C₆-C₁₉ aryl sulfone, preferably C₆-C₁₂ aryl sulfone; and divalent C₆-C₁₉ aryl ether, preferably C₆-C₁₂ aryl ether; and
wherein the total amount of monomeric units U in the partly-sulfonated polybenzimidazole polymer ps-PBI is from about 100 to about 10,000;
wherein from about 40 to about 85 mol-%, preferably from about 45 to about 80 mol-%, and most preferably from about 45 to about 75 mol-% of L, L¹ and L², based on the total amount of L, L¹ and L², is a moiety -A-SO₃H; and
wherein the membrane M is essentially free of water and exhibits a proton conductivity at a temperature of 100 °C or more, preferably in the range of from 100 to 250 °C,
more preferably in the range of from 100 to 200 °C, of at least 10⁻⁵ S/cm, preferably at least 2x10⁻⁵ S/cm, and more preferably at least 5x10⁻⁵ S/cm, as measured by impedance method, in particular as described by K. Uosaki et al., J. Electroanal. Chem., Vol. 287 (1990), 163-167.

Optionally, the monomeric units U of formula (I) and/or (II), in particular the monomeric units U of formula (I), may be linked to one another by a moiety Y or Z, in particular by a moiety Y, as defined above.

Since the membrane M according to the invention is adapted for operating at high temperatures, i.e. above 100 °C, most of the shortcomings associated with the low-temperature PEMFC and DMFC technology can be partly solved or avoided. The ensuing advantages include: (1) The kinetics for both electrode reactions are enhanced, which is of special importance for the direct oxidation of methanol in DMFC. (2) The CO tolerance is dramatically enhanced, from 10-20 ppm of CO at 80 °C, to 1.000 ppm at 130 °C, and up to 30.000 ppm at 200 °C. This high CO tolerance makes it possible for a PEMFC to use hydrogen directly from a simple reformer, so that the affiliate component can be eliminated from the fuel processing system. (3) The required cooling system is simple and practically possible due to the increased temperature gradient between the fuel cell stack and the coolant. Furthermore, the water management system is simplified since the operation temperature generally is above the water boiling point. In this way the overall system efficiency is significantly improved. High reliability, less maintenance, and better transient response capacities are further advantages of the high-temperature PEMFC technology.

Without any intent to be bound by theory, it is believed that the good proton conductivity of the membrane M according to the invention at high temperature (at or above 100 °C) can be attributed to the specifically adapted structural design and degree of sulfonation of the partly-sulfonated polybenzimidazole polymers ps-PBI employed in the membrane M, in combination with an operating state of the membrane M which is essentially free of water. Namely, if polybenzimidazole (PBI) can be grafted with sulfonic group(s) onto from about 40 to about 85 mol.-% of the available imidazole moieties of the PBI unit, it is believed that this kind of partly-sulfonated PBI (ps-PBI) can conduct proton essentially without any proton solvent like water, since it has both a proton donor group (sulfonic acid group) and a proton acceptor group (Im cycle). This is particularly true if either a relatively high degree of sulfonation can be achieved, e.g. equal to or higher than 60 mol.-%, or if essentially half of the available imidazole moieties of the PBI units are sulfonated, e.g. from 40 to 60 mol.-%. In principle, this kind of partly-sulfonated PBI or half-sulfonated PBI should work as the membrane for the PEMFC and DMFC operated at high temperature essentially without the existence of water, since the membranes M according to the invention exhibit good proton conductivity at high temperatures (at or above 100 °C) under conditions where the membrane M is essentially free of water.

The possible proton conduct mechanism based on the aforementioned principle (which may be referred to as "proton donor-proton acceptor" concept implemented in one macromolecule) is shown in the figure below.

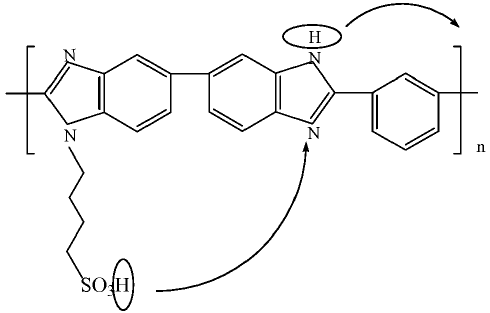

The definitions of the variables used in the preceding formulae, and used in the formulae hereinafter in general, include generic terms which represent the respective substituents. In the term Cₙ-Cₘ, n and m, respectively, indicate the possible number of carbon atoms in each of the substituents or in a specific moiety of such substituent.

The term "divalent" indicates that the respective group or moiety, e.g. divalent alkanediyl and divalent arylalkyl, has two valencies available for binding said group or moiety to two distinct (i.e. different) molecular sites. As an example, in the moiety -A-SO₃H of formula (I) or (II) above, -A- may be e.g. divalent alkanediyl, i.e. an alkyl group which is covalently bonded to two distinct molecular sites via two carbon-carbon single bonds. In this case, the "two distinct molecular sites" are (1) the imidazole nitrogen atom of the benzimidazole units which constitute the polymer backbone (polymer chain) of the ps-PBI polymer on the one hand, and (2) the sulfur atom of the -SO₃H in the moiety -A-SO₃H It is to be noted that herein the terms "alkanediyl", "divalent alkanediyl", and "divalent alkyl" are used synonymously, in each case having the meaning of "divalent" as defined herein. The same applies to other groups and/or moieties which are defined as being "divalent", including (divalent) haloalkanediyl, (divalent) alkenediyl, divalent aryl (also referred to as arylenediyl), divalent arylalkyl, divalent heteroaryl (also referred to as heteroarylenediyl), divalent aryl sulfone (also referred to as arylenediyl sulfone); and divalent aryl ether.

Halogen: fluorine, chlorine, bromide and iodide; in particular fluorine, chlorine, and bromide; and especially fluorine.

Alkyl, and the alkyl groups in alkylaryl and alkylsultone: saturated, linear or branched hydrocarbon groups having 1 to 10, e.g. 2, 4, 6 or 8 hydrocarbon atoms, e.g. C₁-C₁₀ alkyl, such as methyl, ethyl, n-propyl, 1-methyl ethyl, n-butyl, 1-methyl propyl, 2-methyl propyl, 1,1-dimethyl ethyl, n-pentyl, 1-methyl butyl, 2-methyl butyl, 3-methyl butyl, 2,2-dimethyl propyl, 1-ethyl propyl, n-hexyl, 1,1-dimethyl propyl, 1,2-dimethyl propyl, 1-methyl pentyl, 2-methyl pentyl, 3-methyl pentyl, 4-methyl pentyl, 1,1-dimethyl butyl, 1,2-dimethyl butyl, 1,3-dimethyl butyl, 2,2-dimethyl butyl, 2,3-dimethyl butyl, 3,3-dimethyl butyl, 1-ethyl butyl, 2-ethyl butyl, 1,1,2-trimethyl propyl, 1,2,2-trimethyl propyl, 1-ethyl-1-methyl propyl, 1-ethyl-2-methyl propyl, n-heptyl, 2-methyl hexyl, 3-methyl hexyl, n-octyl, 2-methyl heptyl, 3-methyl heptyl, n-nonyl, n-decyl, and the like.

Halogen alkyl (hereinafter referred to as haloalkyl): saturated, linear or branched hydrocarbon groups having 1 to 10, e.g. 2, 4, 6 or 8 hydrocarbon atoms, in particular the alkyl groups as defined above, wherein the hydrogen atoms of said groups may be fully or partially substituted by halogen atoms as defined above: e.g. C₁-C₁₀ haloalkyl, in particular C₁-C₁₀ fluoroalkyl, such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 1,1,1-trifluoroprop-2-yl, and the like.

Alkanediyl: saturated, linear or branched hydrocarbon groups having 1 to 10, e.g. 2, 4, 6 or 8 hydrocarbon atoms, such as the alkyl groups defined above, wherein the (divalent) alkanediyl group has two valencies available for covalently binding said group or moiety to two distinct (i.e. different) molecular sites via two carbon-carbon single bonds; e.g. C₁-C₁₀ alkanediyl, such as methanediyl, ethanediyl, n-propanediyl, 1-methyl ethanediyl, n-butanediyl, 1-methyl propanediyl, 2-methyl propanediyl, 1,1-dimethyl ethanediyl, n-pentanediyl, 1-methyl butanediyl, 2-methyl butanediyl, 3-methyl butanediyl, 2,2-dimethyl propanediyl, 1-ethyl propanediyl, n-hexanediyl, 1,1-dimethyl propanediyl, 1,2-dimethyl propanediyl, 1-methyl pentanediyl, 2-methyl pentanediyl, 3-methyl pentanediyl, 4-methyl pentanediyl, 1,1-dimethyl butanediyl, 1,2-dimethyl butanediyl, 1,3-dimethyl butanediyl, 2,2-dimethyl butanediyl, 2,3-dimethyl butanediyl, 3,3-dimethyl butanediyl, 1-ethyl butanediyl, 2-ethyl butanediyl, 1,1,2-trimethyl propanediyl, 1,2,2-trimethyl propanediyl, 1-ethyl-1-methyl propanediyl, 1-ethyl-2-methyl propanediyl, n-heptanediyl, 2-methyl hexanediyl, 3-methyl hexanediyl, n-octanediyl, 2-methyl heptanediyl, 3-methyl heptanediyl, n-nonanediyl, n-decanediyl, and the like.

Halogen alkanediyl (hereinafter referred to as haloalkanediyl): saturated, linear or branched hydrocarbon groups having 1 to 10, e.g. 2, 4, 6 or 8 hydrocarbon atoms, wherein the alkanediyl group has two valencies available for covalently binding said group or moiety to two distinct (i.e. different) molecular sites via two carbon-carbon single bonds, in particular the alkanediyl groups as defined above, wherein the hydrogen atoms of said groups may be fully or partially substituted by halogen atoms as defined above: e.g. C₁-C₁₀ haloalkyl, in particular C₁-C₁₀ fluoroalkyl, such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 1,1,1-trifluoroprop-2-yl, and the like.

Alkenediyl: monoethylenically unsaturated, linear or branched hydrocarbon groups having 2 to 10, e.g. 2 to 4, 2 to 6, or 2 to 8, carbon atoms and a carbon-carbon double bond in any position of the chain of carbon atoms, e.g. C₂-C₁₀ alkenediyl, such as ethenediyl, propenediyl, 1-methyl ethenediyl, 1-butenediyl, 2-butenediyl, 1-pentenediyl, 2-pentenediyl, 3-pentenediyl, 1-hexenediyl, 2-hexenediyl, 3-hexenediyl, 1-heptenediyl, 2-heptenediyl, 3-heptenediyl, 1-octenediyl, 2-octenediyl, 3-octenediyl, 4-octenediyl, and the like.

Aryl: aromatic hydrocarbon having 6 to 15 ring member carbon atoms, in particular 6 to 12 ring member carbon atoms: homo-, bi- or tricyclic, in particular homo- or bicyclic hydrocarbon radicals, said aromatic cyclic groups in particular include phenyl and biphenyl.

Arylalkyl: aryl group as defined above, having 7 to 15 carbon atoms, 6 to 12 of which are ring member carbon atoms, wherein the aromatic cycle is substituted with one or more, e.g. 1, 2 or 3, in particular 1 alkyl group as defined above, such as C₁-C₆ alkyl, in particular linear C₁-C₆ alkyl, e.g. methylphenyl, ethylphenyl, propylphenyl, and butylphenyl.

Heterocycle: having 5 to 15 ring member atoms, in particular 5- or 6-membered heterocycle: homo-, bi- or tricyclic, in particular homo- or bicyclic hydrocarbon radicals containing 1, 2, 3 or 4 heteroatoms selected from the group consisting of a nitrogen atom, an oxygen atom and a sulfur atom; unsaturated (heterocyclyl) includes partially unsaturated, e.g. mono-unsaturated, and aromatic (heteroaryl); said heterocycles in particular include:
- 5-membered heteroaryl, containing 1, 2, 3 or 4 nitrogen atoms or 1, 2 or 3 nitrogen atoms and one sulfur or oxygen atom: 5-membered heteroaryl groups which, in addition to carbon atoms, may contain 1, 2, 3 or 4 nitrogen atoms or 1, 2 or 3 nitrogen atoms and one sulfur or oxygen atom as ring members, for example 2-furyl, 3-furyl, 2-thienyl, 3-thienyl, 2-pyrrolyl, 3-pyrrolyl, 3-isoxazolyl, 4-isoxazolyl, 5-isoxazolyl, 3-isothiazolyl, 4-isothiazolyl, 5-isothiazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 2-imidazolyl, 4-imidazolyl, 1,2,4-oxadiazol-3-yl, 1,2,4-oxadiazol-5-yl, 1,2,4-thiadiazol-3-yl, 1,2,4-thiadiazol-5-yl, 1,2,3-triazol-yl, 1,2,4-triazol-3-yl, tetrazolyl, 1,3,4-oxadiazol-2-yl, 1,3,4-thiadiazol-2-yl and 1,3,4-triazol-2-yl;
- 6-membered heteroaryl, containing 1, 2, 3 or 4 nitrogen atoms: 6-membered heteroaryl groups which, in addition to carbon atoms, may contain 1, 2, 3 or 4 or 1, 2 or 3 nitrogen atoms as ring members, for example 2-pyridinyl, 3-pyridinyl, 4-pyridinyl, 3-pyridazinyl, 4-pyridazinyl, 2-pyrimidinyl, 4-pyrimidinyl, 5-pyrimidinyl, 2-pyrazinyl, 1,2,3-triazinyl, 1,3,5-triazin-2-yl and 1,2,4-triazin-3-yl;
- 5- and 6-membered heterocyclyl, containing 1, 2, 3 or 4 nitrogen atoms or 1, 2 or 3 nitrogen atoms and one sulfur or oxygen atom: 3-pyrazolidinyl, 4-pyrazolidinyl, 5-pyrazolidinyl, 2-pyrrolidin-2-yl, 2-pyrrolidin-3-yl, 3- pyrrolidin-2-yl, 3-pyrrolidin-3-yl, 1-piperidinyl, 2-piperidinyl, 3-piperidinyl, 4-piperidinyl, pyridin(1,2-dihydro)-2-on-1-yl, 2-piperazinyl, 1-pyrimidinyl, 2-pyrimidinyl, morpholin-4-yl and thiomorpholin-4-yl.

Aryl sulfone: aryl group (or arylalkyl group) as defined herein above, having 6 to 19 carbon atoms, in particular 6 to 12 carbon atoms, and carrying at least one, e.g. 1 or 2, in particular 1 sulfone moiety -SO₂, e.g. phenyl sulfone.

Aryl ether: aryl group (or arylalkyl group) as defined herein above, having 6 to 19 carbon atoms, in particular 6 to 12 carbon atoms, and comprising at least one, e.g. 1 or 2, in particular 1 ether moiety -O-, e.g. diphenyl ether.

The degree of sulfonation is defined by the percentage of sulfonic groups to the total amount of the imidazole cycles in the partly-sulfonated polybenzimidazole polymer ps-PBI. Thus, if not indicated otherwise, the degree of sulfonation is indicated as mol.-%.

In one embodiment, the partly-sulfonated polybenzimidazole polymer ps-PBI comprises, in polymerized form, at least 90 mol-%, preferably at least 95 mol-%, more preferably at least 99 mol-%, and particularly preferred at least 99.9 mol-% monomeric units U of formula (I), based on the total amount of monomeric units in the partly-sulfonated polybenzimidazole polymer ps-PBI. In this case, the partly-sulfonated polybenzimidazole polymer ps-PBI essentially consists of the monomeric units U of formula (I), apart from any end groups terminating the polymer chains, such as low alkyl groups, e.g. methyl, ethyl or propyl. In this embodiment, the monomeric units U of formula (I) may be linked to one another by a moiety Y or Z, in particular by a moiety Y, as defined above.

In another embodiment, the partly-sulfonated polybenzimidazole polymer ps-PBI comprises, in polymerized form, at least 90 mol-%, preferably at least 95 mol-%, more preferably at least 99 mol-%, and particularly preferred at least 99.9 mol-% monomeric units U of formula (II), based on the total amount of monomeric units in the partly-sulfonated polybenzimidazole polymer ps-PBI. In this case, the partly-sulfonated polybenzimidazole polymer ps-PBI essentially consists of the monomeric units U of formula (II), apart from any end groups terminating the polymer chains, such as low alkyl groups, e.g. methyl, ethyl or propyl.

According to the invention, from about 40 to about 85 mol-% of L, L¹ and L², based on the total amount of L, L¹ and L², are a moiety -A-SO₃H. Preferably, from about 45 to about 80 mol-%, and more preferably from about 45 to about 75 mol-% of L, L¹ and L², based on the total amount of L, L¹ and L², is a moiety -A-SO₃H.

In a particularly preferred embodiment, from about 60 to about 85 mol-%, more preferably from about 60 to about 80 mol-%, and even more preferably from about 65 to about 75 mol-% of L, L¹ and L², based on the total amount of L, L¹ and L², is a moiety -A-SO₃H Accordingly, the remainder of L, L¹ and L² is hydrogen.

In another particularly preferred embodiment, from about 40 to about 60 mol-%, more preferably from about 45 to about 55 mol-%, and even more preferably about 50 mol-% of L, L¹ and L², based on the total amount of L, L¹ and L², is a moiety -A-SO₃H. Accordingly, the remainder of L, L¹ and L² is hydrogen.

Where the ps-PBI comprises, in polymerized form, at least 90 mol-% monomeric units U of formula (I), based on the total amount of monomeric units in the ps-PBI, preferably from about 40 to about 85 mol-%, more preferably from about 45 to about 80 mol-%, and even more preferably from about 45 to about 75 mol-% of L, based on the total amount of L, are a moiety -A-SO₃H. Accordingly, the remainder of L is hydrogen.

Where the ps-PBI comprises, in polymerized form, at least 90 mol-% monomeric units U of formula (II), based on the total amount of monomeric units in the ps-PBI, preferably from about 40 to about 85 mol-%, more preferably from about 45 to about 80 mol-%, and even more preferably from about 45 to about 75 mol-% of L¹ and L², based on the total amount of L¹ and L², are a moiety -A-SO₃H. Accordingly, the remainder of L¹ and L² is hydrogen.

As described above, in a preferred ambodiment of the present invention, the partly-sulfonated polybenzimidazole polymer ps-PBI comprises, in polymerized form, at least 90 mol-% monomeric units U of formula (II), based on the total amount of monomeric units in the ps-PBI. In this embodiment, preferably at least in 80 %, more preferably at least in 90 %, and most preferably in essentially all of the monomeric units U of formula (II), based on the total amount of the monomeric units U of formula (II), at least one of L¹ and L² is hydrogen; and particularly preferably one of L¹ and L² is hydrogen and the other is a moiety -A-SO₃H.

In a particularly preferred embodiment, in at least 80 %, preferably in at least 90 %, and most preferably in essentially all of the monomeric units U of formula (II), based on the total amount of the monomeric units U of formula (II), L¹ is hydrogen and L² is a moiety -A-SO₃H. In another particularly preferred embodiment, in at least 80 %, preferably at least 90 %, and most preferably in essentially all of the monomeric units U, based on the total amount of the monomeric units U, L² is hydrogen and L¹ is a moiety -A-SO₃H.

In another embodiment, A is selected from the group consisting of divalent linear C₁-C₁₀ alkanediyl; more preferably linear C₁-C₆ alkanediyl; and most preferably linear C₁-C₄ alkanediyl; in particular methanediyl, ethanediyl, n-propanediyl, and n-butanediyl; divalent C₇-₁₂ arylalkyl, more preferably divalent C₇-C₁₀ arylalkyl; and most preferably phenyl carrying a C₁-C₄ alkyl group, in particular a linear C₁-C₄ alkyl group, especially methyl phenyl, ethyl phenyl, propyl phenyl, and butyl phenyl; divalent linear C₁-C₁₀ fluoroalkane, more preferably linear C₁-C₆ fluoroalkanediyl; and most preferably linear C₁-C₄ fluoroalkanediyl; in particular fluoromethanediyl, fluoroethanediyl, fluoro-n-propanediyl, and fluoro-n-butanediyl.

In another embodiment, Z is selected from the group consisting of divalent C₄-C₈ alkanediyl, such as butanediyl, pentanediyl, hexanediyl, heptanediyl and octanediyl, more preferably linear C₄-C₈ alkanediyl; divalent C₂-C₈ alkenediyl, more preferably C₂-C₄ alkenediyl, in particular ethenyl and propenyl; divalent C₆-C₁₂ aryl, in particular phenyl group and diphenyl group; divalent C₅-C₁₂ heteroaryl, more preferably C₅-C₆ heteroaryl, in particular imidazole group and pyridine group; divalent C₅-C₁₂ heterocyclyl, more preferably C₅-C₆ heterocyclyl, in particular piperidine group; divalent C₆-C₁₅ aryl sulfone, more preferably C₆-C₁₂ aryl sulfone, in particular phenyl sulfone and diphenyl sulfone; divalent C₆-C₁₅ aryl ether, more preferably C₆-C₁₂ aryl ether, in particular phenyl ether and diphenyl ether.

In a particularly preferred embodiment of the present invention, the partly-sulfonated polybenzimidazole polymer ps-PBI is selected from the group consisting of poly-2,2'-(m-phenylene)-5,5'-bibenzimidazole; poly-2,2'-(pyridylene-3",5")-bibenzimidazole; poly-2,2'-(furylene-2",5")-5,5'-bibenzimidazole; poly-2,2'-(naphthalene-1 ",6")-5,5'-bibenzimidazole; poly-2,2'-(biphenylene-4",4")-5,5'-bibenzimidazole; poly-2,2'-amylene-5,5'-bibenzimidazole; poly-2,2'-octamethylene-5,5'-bibenzimidazole; poly-2,6'-(m-phenylene)-diimidazobenzene; poly-(1-(4,4-diphenylether)-5-oxybenzimidazole)-benzimidazole; poly-(1-(2-pyridine)-5-oxybenzimidazole)-benzimidazole; poly-(3-(4-(6-(1-benzimidazol-5-yloxy)-1-benzimidazol-2-yl)phenyl)-3-phenylisobenzofuran-1 (3H)-one) and poly(2,5-benzimidazole).

In another preferred embodiment, Y is O or Y is a single carbon-carbon bond. This applies in particular in the case where the ps-PBI comprises, in polymerized form, at least 90 mol-% monomeric units U of formula (II), based on the total amount of monomeric units in the ps-PBI. More preferably, in this case Y is O.

In another preferred embodiment, the partly-sulfonated polybenzimidazole polymer ps-PBI has a number average molecular weight M_{N} in the range of from about 1,000 to about 1,000,000; preferably in the range of from about 5000 to about 1,000,000. In another preferred embodiment, the ps-PBI has a weight average molecular weight M_{W} in the range of from about 10,000 to about 1,000,000; preferably in the range of from about 20,000 to about 1,000,000.

In another preferred embodiment, the membrane M according to the invention has a thickness in the range of from about 20 µm to about 200 µm, more preferably from about 50 µm to about 100 µm, under conditions where the membrane M is essentially free of water.

According to the invention, the membrane M exhibits a significant conductivity under conditions where the membrane M is essentially free of water (also referred to as anhydrous state). Usually, the water content of the membrane M at anhydrous state (in particular directly after production of the membrane M) is less than 0.5 wt.-%, and especially less than 0.1 wt.-%, based on the total weight of the membrane M. However, during operation of a fuel cell, anhydrous state usually means that water vaporizes from the membrane M at elevated temperatures (above 100 °C) without humidification of the reactant gas. In this case, the membrane M usually is not completely dehydrated (i.e. anhydrous), especially at temperatures below 130 °C, due to the water electrochemically generated during fuel cell operation. Typically, in this context "essentially free of water" means that the membrane M has a water content of 10 wt.-% or less, based on the total weight of the membrane M. In a preferred embodiment, the membrane M according to the invention, under conditions where the membrane M is essentially free of water, has a water content of 5 wt.-% or less, more preferably 3 wt.-% or less, based on the total weight of the membrane M. In this context, it is understood that the reactant gas employed to feed an inventive proton exchange membrane fuel cell is not humidified; or the reactant gas is only humidified to an extent of at most 20 vol.-%, in particular at most 10 vol.-%, based on the total volume of the reactant gas.

A proton exchange membrane fuel cell, in particular a polymer electrolyte membrane fuel cell (PEMFC) or a direct methanol fuel cell (DMFC), comprising a proton exchange membrane M as described herein, which is operable at a temperature of 100 °C or more, preferably in the range of from 100 to 250 °C, under conditions where the proton exchange membrane M is essentially free of water.

Such PEMFC and DMFC proton exchange membrane fuel cells typically include, in addition to the proton exchange membrane M according to the invention (also referred to as polymer electrolyte membrane), an anode (fuel electrode) and a cathode (oxidizing agent electrode). The membrane M is intermediated between the anode and the cathode. The anode generally includes a catalyst layer to promote the oxidation of a fuel, and the cathode generally includes a catalyst layer to promote the reduction of an oxidizing agent. Examples of fuel that may be supplied to the anode include hydrogen, a hydrogen-containing gas, a mixture of methanol vapor and water vapor, and an aqueous methanol solution. Examples of the oxidizing agent supplied to the cathode include oxygen, oxygen containing gas, and air. In this context, it is understood that the reactant gas employed to feed an inventive proton exchange membrane fuel cell is not humidified; or the reactant gas is only humidified to an extent of at most 20 vol.-%, in particular at most 10 vol.-%, based on the total volume of the reactant gas.

The PEMFC provided with a membrane M according to the invention can operate at temperatures of up to at least 170 °C. Additionally, such PEMFC can tolerate up to at least 3 vol-% carbon monoxide in the fuel steam, so that hydrogen-rich gas from a fuel reformer can directly be used for generation of electricity. The DMFC provided with a membrane M according to the invention can be operated at temperatures up to at least 150 °C. Additionally, such DMFC exhibit better performance compared with the Nafion membranes.

In another aspect, the present invention relates to methods for the production of a proton exchange membrane M according to the present invention. The ps-PBI employed in the membranes M can be prepared by chemical modification route, direct synthesis approach and post-sulfonation method.

Polybenzimidazoles PBI used as starting compounds in the preparation methods described herein are polybenzimidazoles and related families of compounds (see e.g., US patents nos. 4,814,399; 5,525,436; and 5,599,639). More specific examples of polybenzimidazoles, typically with a molecular weight between 1000 and 100,000, are poly-2,2'-(m-phenylene)-5,5'-bibenzimidazole; poly-2,2'-(pyridylene-3",5")-bibenzimidazole; poly-2,2'-(furylene-2",5")-5,5'-bibenzimidazole; poly-2,2'-(naphthalene-1",6")-5,5'-bibenzimidazole; poly-2,2'-(biphenylene-4",4")-5,5'-bibenzimidazole; poly-2,2'-amylene)-5,5'-bibenzimidazole; poly-2,2'-octamethylene-5,5'-bibenzimidazole; poly-2,6'-(m-phenylene)diimidazobenzene; poly-(1-(4,4-diphenylether)-5-oxybenzimidazole)-benzimidazole; poly-(1-(2-pyridine)-5-oxybenzimidazole)-benzimidazole; poly-(3-(4-(6-(1-benzimidazol-5-yloxy)-1-benzimidazol-2-yl)phenyl)-3-phenylisobenzofuran-1 (3H)-one) and poly(2,5-benzimidazole). These polymers may be prepared from an aromatic diacid and an aromatic tetramine as described in the above US patents.

The most preferred polymer is poly 2,2'-(m-phenylene)-5,5'-bibenzimidazole product, PBI, known as Celazole™ provided by Hoechst Celanese. This polybenzimidazole is an amorphous thermoplastic polymer with a glass transition temperature of 425-436 °C. In this invention, PBI is chosen as the matrix polymer.

The proton exchange membranes M of the present invention comprising the partly-sulfonated PBI (ps-PBI) described herein can be prepared through the aforementioned three ways, which will be explained in more detail hereinafter, using PBI as an example for illustrating purpose.

The first approach comprises chemical modification of the commercial PBI with an alkali hydride such as lithium hydride, followed by reaction with sulfonating reagents. In general, PBI is dissolved in an aprotic organic solvent, in particular in a purified organic solvent, such as N,N-dimethylacetamide (DMAc), preferably under protective atmosphere such as nitrogen, at room temperature. Next, lithium hydride (LiH), preferably in pulverized form, is slowly added to the solution, which is allowed to stir for some time with CaCl₂ as catalyst and under N₂ atmosphere. Purified sulfonating reagents (depending on the kind of side-chain to be incorporated) are added. Examples of suitable sulfonating reagents particularly include 1,3-propanesultone, 4-bromomethyl benzenesulfonate and 1,4-butanesultone. The sulfonating reagents are added in this step with calculated feed ratios.

The amount of the sulfonating reagents is calculated based on the idea that there are two active sites of imidazole unit, namely NH moieties, in one PBI unit. Usually, the amount of sulfonating reagent necessary to achieve the desired degree of sulfoalkylation in the resulting ps-PBI is more than the stoichiometric equivalent of the active imidazole nitrogen functionalities of the polybenzimidazole.

The reaction solution is stirred for e.g. one day and the resulting polymer is precipitated, for example by pouring it into acetone containing a few drops of hydrochloric acid. The precipitate is collected by filtration and washed, preferably with an organic solvent, for example with acetone. Then the obtained products are dissolved in organic solvent, such as N,N-dimethyl acetamide (DMAc), N,N-dimethyl formamide (DMF), N-methyl pyrrolidone (NMP), and dimethyl sulfoxide (DMSO). The membrane may be prepared by application of the obtained solution onto a substrate, in particular by solvent-casting method or soaking method. A suitable substrate advantageously is flat or at least has a flat bottom, e.g. a disk or a plate, in particular made of a relatively temperature-resistant plastic like Teflon, or of glass.

This method has the advantages of appropriate synthesis conditions. Particularly, ps-PBI can be prepared with controlled degree of sulfonation by variation of the number of equivalents of the LiH and/or side-chain reagents. Further details of the reaction conditions can be derived e.g. from US 4,814,399 which is incorporated herein by reference.

In a preferred embodiment of the present invention, a method for the production of a proton exchange membrane M as described herein, comprises the following steps:
(i) providing a solution S of a polybenzimidazole polymer PBI in an organic solvent OS which is essentially free of water;
(ii) adding to the solution S obtained in step (i) an alkali hydride AH, whereby a polybenzimidazole polyanion PBI-PA having a plurality of anionic imidazole nitrogen functionalities is obtained;
(iii) reacting the polybenzimidazole polyanion PBI-PA obtained in step (ii) with a compound C, wherein the compound C comprises at least one sulfonate moiety SM, or at least one moiety CM which can be converted into a sulfonate moiety, and obtaining a reaction product RP by precipitation from the reaction mixture;
(iv) dissolving the reaction product RP obtained in step (iii) in an aprotic organic solvent OS1, applying the solution thus obtained onto a substrate SB, preferably a flat substrate, and forming a membrane film MF by evaporating the solvent OS1;
(v) treating the membrane film MF obtained in step (iv) with an oxidizing agent, such as H₂O₂, and subsequently with an inorganic acid, such as H₂SO₄, preferably in each case at an elevated temperature, whereby a membrane film MF1 is obtained;
(vi) optionally, treating the membrane film MF1 obtained in step (v) with a purified solvent, preferably purified H₂O, at an elevated temperature; and
(vii) drying the membrane film MF1 obtained in step (v) or (vi), respectively, whereby a membrane M is obtained.

Suitable organic solvents OS in step (i) include N,N-dimethyl acetamide (DMAc), N,N-dimethyl formamide (DMF), N-methyl pyrrolidone (NMP), and dimethyl sulfoxide (DMSO). The residual content of water in the organic solvent OS usually is less than 0.5 wt.-%, preferably less than 0.25 wt.-%, and more preferably less than 0.1 wt.-%, based on the total weight of the organic solvent OS.

Typically, the concentration of the polybenzimidazole polymer PBI in the solution S of step (i) is in the range of from 5 to 15 g/l.

The alkali hydride AH in step (ii) is particularly selected from LiH, NaH and KH. Addition of AH to the solution S usually is in pure form. The amount of AH added usually is in excess of the available imidazole nitrogen functionalities of the PBI polymer in the solution S. For example, the molar ratio of AH to the available imidazole nitrogen functionalities of the PBI polymer may be in the range of from 10:1 to 5:1.

The compound C preferably is selected from the group consisting of sultones having from 1 to 10, preferably from 1 to 4 carbon atoms as chain members, in particular 1,3-propanesultone and 1,4-butanesultone; and C₇-C₁₅ arylalkyl sulfonates, preferably C₇-C₁₂ arylalkyl sulfonates, and more preferably C₇-C₁₀ arylalkyl sulfonates, the sulfonates carrying a halogen substituent X, such as fluorine, chlorine, bromine or iodine, which can react with an alkali ion, such as lithium ion, of the alkali hydride AH employed in step (ii), in particular 4-halomethyl benzenesulfonate, and especially 4-bromomethyl benzenesulfonate.

In step (iii), convertible moieties CM comprise sultone and sulfuric acid functionality (-SO₃H); suitable compounds C comprising a CM moiety include e.g. the aforementioned sultones and compounds containing a sulfuric group -SO₃H.

Generally, in step (iii) an amount of the compound C is employed which is more than the stoichiometric equivalent of the anionic imidazole nitrogen functionalities of the polybenzimidazole anion PBI-PA obtained in step (ii); preferably 200 mol-% or more, e.g. in the range of from 250 mol-% to 600 mol-%, particularly in the range of from 300 mol-% to 500 mol-%, of the stoichiometric equivalent of the anionic imidazole nitrogen functionalities of the polybenzimidazole anion PBI-PA obtained in step (ii).

Precipitation in step (iii) can be achieved e.g. by treatment with an inorganic acid, such as HCl, filtration and washing, e.g. with an organic solvent like acetone.

Suitable organic solvents OS1 in step (iv) include DMF, DMAc, NMP and DMSO.

In step (iv), application of the solution obtained onto the substrate SB is particularly carried out by solvent-casting method.

Evaporation of the solvent OS1 in step (iv) can advantageously be achieved by applying vacuum, in particular high vacuum.

Suitable oxidizing agents in step (v) include H₂O₂.

Suitable inorganic acids in step (v) include H₂SO₄, HCl and H₃PO₄.

The elevated temperature in step (v) typically is in the range of from 70 °C to 120 °C, in particular from 80 to 100 °C.

Suitable purified solvents in step (vi) particularly include water.

The elevated temperature in step (vi) typically is in the range of from 70 °C to 120°C, in particular from 80 to 100 °C.

Drying of the membrane film MF or MF1, respectively, in step (vii) is advantageously carried out by applying vacuum, in particular high vacuum.

The second approach to produce the proton exchange membranes M of the present invention comprising the partly-sulfonated PBI (ps-PBI) described herein is direct polymerization from the sulfonated dicarboxylic acid monomers. For ps-PBI, it can be directly synthesized from aromatic bis-o-diamines (such as 3,3'-diaminobenzidine DAB) and sulfonated dicarboxylates (such as 2-sulfonic-1,4-2-benzencarboxylic acid (SBBA), or 4,8-disulfonyl-2,6-naphthalenedicarboxylic acid (DSNDA).

A typical example of the copolycondesation of ps-PBI, using DAB and DSNDA for illustrating purpose, is shown as follows: Poly(phosphoric acid) (PPA) is added into a three-necked flask equipped with a mechanical stirring device, a nitrogen inlet and an outlet. An mixture of e.g. DAB and e.g. DSNDA, e.g. a molar ratio DAB:DSNDA in the range of from 1.2 to 2.5 or an essentially stoichiometric molar ratio, is charged into the flask under protective atmosphere, e.g. nitrogen flow, with stirring. Then, the reaction mixture is stirred under N₂ at an elevated temperature, e.g. in the range of from 130 to 170 °C, for some time, e.g. in the range of from 5 h to 10 h. Then, the hot slurry solution is poured into e.g. water, and the resulting noodle polymer is filtrated off and advantageously dipped in an aqueous solution of an alkali carbonate, such as Na₂CO₃, e.g. a 5 wt.-% Na₂CO₃ solution, preferably for at least 24 h. Finally, the sulfonated polymer in the sodium form (ps-PBINa) is thoroughly rinsed e.g. with water, and dried, preferably under vacuum. The obtained ps-PBINa is then dissolved in organic solvent, such as DMF, DMAc, NMP and DMSO. The membrane may be prepared by e.g. solvent-casting method on a Teflon dish. Before use, the membranes must be transformed into protonated H⁺ form, typically by immersion into H₂SO₄, in particular 1 M H₂SO₄.

In a preferred embodiment of the present invention, a method for the production of a proton exchange membrane M as described herein, comprises the following steps:
(i') providing a mixture of an aromatic bis-o-diamine AD and a sulfonated dicarboxylate SD, respectively, in a poly(phosphoric acid) PPA; whereby a reaction mixture RM is obtained; and
(ii') copolymerizing the aromatic bis-o-diamine AD and the sulfonated dicarboxylate SD in the reaction mixture RM of step (i'), whereby a reaction product RP' is obtained.
(iii') separating the reaction product RP' obtained in step (ii') from the reaction mixture RM, and treating the reaction product RP' with an aqueous alkali or earth alkali solution, whereby an (earth) alkali substituted reaction product AS-RP' is obtained;
(iv') dissolving the (earth) alkali substituted reaction product AS-RP' obtained in step (iii') in an aprotic organic solvent OS2, applying the solution thus obtained onto a substrate SB', preferably a flat substrate, and forming a membrane film MF' by evaporating the solvent OS2, preferably at elevated temperature;
(v') treating the membrane film MF' obtained in step (iv') subsequently with an oxidizing agent, such as H₂O₂, with an inorganic acid, such as H₂SO₄, and with a purified solvent, preferably purified H₂O, preferably at an elevated temperature, whereby a membrane film MF1' is obtained; and
(vi') drying the membrane film MF1' obtained in step (v'), whereby a membrane M is obtained.

The aromatic bis-o-diamine AD in step (i') is 3,3'-diaminobenzidine.

The sulfonated dicarboxylate SD in step (i') is selected from the group comprising 2-sulfonic-1,4-2-benzenecarboxylic acid; 4,8-disulfonyl-2,6-naphthalenedicarboxylic acid, 4,4'-dicarboxydiphenyl ether-2,2'-disulfonic acid disodium salt; 4,4'-sulfonyldibenzoic acid; and 5-sulfoisophthalic acid monosodium salt.

Usually, in step (i'), the aromatic bis-o-diamine AD and the sulfonated dicarboxylate SD, respectively, are employed in a molar ratio AD:SD in a range of from 2.5:1 to 1.2:1. In another embodiment, in step (i) an essentially stoichiometric mixture of the aromatic bis-o-diamine AD and the sulfonated dicarboxylate SD, respectively, is provided in the poly(phosphoric acid) PPA.

Copolymerization according to step (ii') may advantageously be carried out by emulsion polymerization or solution polymerization, as described by H. Xu et al., Polymer, Vol. 48 (2007), 5556-5564.

Separation of the reaction product RP' obtained in step (ii') from the reaction mixture RM according to step (iii') may advantageously be achieved by filtration.

Suitable aqueous (earth) alkali solution to be used in step (iii') include carbonate and hydrogen carbonate solutions, particularly carbonate solutions, such as aqueous solutions of Na₂CO₃, K₂CO₃, and Li₂CO₃.

Suitable aprotic solvents OS2 in step (iv') include DMF, DMAc, NMP and DMSO.

In step (iv'), application of the solution obtained onto the substrate SB' is particularly carried out by solvent-casting method.

The elevated temperature in step (iv') typically is in the range of from 70 °C to 150 °C, in particular from 80 to 120 °C.

Evaporation of the solvent OS2 in step (iv') can advantageously be achieved by applying vacuum, in particular high vacuum.

Suitable inorganic acids in step (v') include H₂SO₄, HCl and H₃PO₄.

The elevated temperature in step (v') typically is in the range of from 70 °C to 120 °C, in particular from 80 to 100 °C.

Drying of the membrane film MF1' in step (vi') is advantageously carried out by applying vacuum, in particular high vacuum.

This method yields ps-PBI with exactly desired structure and precisely controlled degree of sulfonation. However, almost all of the sulfonated monomers are not commercially available and need to be synthesized. Synthesis of these compounds is known to the person skilled in the art, and is described for example in S. Qing et al, Reactive & Functional Polymer, Vol. 66 (2006), 219-227.

The third method to produce the proton exchange membranes M of the present invention comprising the partly-sulfonated PBI (ps-PBI) described herein is post-sulfonation of PBI by heat treatment of sulfuric acid-doped membranes at high temperatures, e.g. in the range of from 400 to 480 °C, in particular from 425 to 475 °C.

The commercial PBI membrane is immersed into a H₂SO₄ solution, preferably having a concentration of 2M, and placed into a vacuum oven to get rid of the residual water. Then, the H₂SO₄-doped PBI membranes are heated above 400 °C for post-sulfonation, preferably in the range of from 400 to 480 °C, in particular from 425 to 475 °C. The obtained membranes are put into e.g. deionized water before use.

In a preferred embodiment of the present invention, a method for the production of a proton exchange membrane M as described herein, comprises the following steps:
(i") providing a reaction mixture RM' by immersing a dry polybenzimidazole polymer PBI membrane into a sulfuric acid solution;
(ii") heating the reaction mixture RM' obtained in step (i"), optionally under vacuum, to a temperature of at least 70 °C, preferably in the range of from 70 to 120 °C, such that essentially all solvents are evaporated from the reaction mixture RM', whereby a precursor membrane PM is obtained;
(iii") heating the precursor membrane PM obtained in step (ii") to a temperature of at least 400 °C, preferably at least 425 °C, for a time period of from 0.5 to 20 h, preferably from 1 to 10 h, and more preferably from 3 to 5 h, whereby a membrane film MF' is obtained;
(iv") treating the membrane film MF' obtained in step (iii") subsequently with an oxidizing agent, such as H₂O₂, with an inorganic acid, such as H₂SO₄, and with a purified solvent, preferably purified H₂O, preferably at an elevated temperature, whereby a membrane film MF1' is obtained; and
(v") drying the membrane film MF1' obtained in step (iv"), whereby a membrane M is obtained.

The sulfuric acid solution employed in step (i") typically has a concentration of 2M.

In step (ii"), preferably, the reaction mixture RM' obtained in step (i") is heated to a temperature range of from 70 to 120 °C for a time period of from 1 to 24 h, and more preferably to a temperature range of from 80 to 100 °C for a time period of from 3 to 10 h.

In step (iii"), preferably, the precursor membrane PM obtained in step (ii") is heated to a temperature of at least 400 °C for a time period of from 1 to 10 h, and more preferably to a temperature of at least 450 °C for a time period of from 3 to 5 h.

The elevated temperature in step (iv') typically is in the range of from 70 °C to 120 °C, in particular from 80 to 100 °C.

Drying of the membrane film MF1' in step (v") is advantageously carried out by applying vacuum, in particular high vacuum.

This method is quite simple. However, it might occur that cross-linked and/or fragile membranes with low degree of sulfonation are obtained because of the high reaction temperature which is essential for sulfonation due to the rather low reactivity of commercial PBI.

In a further aspect, the present invention relates to novel partly-sulfonated polybenzimidazole polymers ps-PBI, as defined in any of claims 1 to 9, obtainable by any of the methods of claims 11 to 17. In still a further aspect of the present invention, the novel partly-sulfonated polybenzimidazole polymers ps-PBI can be used as a component of a proton exchange membrane in proton exchange membrane fuel cells, in particular in a polymer electrolyte membrane fuel cell or a direct methanol fuel cell.

The ps-PBI membranes of the present invention exhibit relative high proton conductivity (in particular at least 10⁻⁵ S/cm, and up to 10⁻³ S/cm or more) at high temperature (in particular 100-200°C or more) and anhydrous state. ps-PBI of the invention is particularly well adapted for use as a proton-exchange membrane in a high temperature PEMFC and DMFC because it is essentially free of water and has high proton conductivity at high temperature. Therefore, it allows for operation of fuell cells with minimized humidification or even without humidification of the reactant gas. Typically, in this context "essentially free of water" means that the membrane M has a water content of 10 wt.-% or less, preferably 5 wt.-% or less, more preferably 3 wt.-% or less, based on the total weight of the membrane M. Moreover, in this context, it is understood that the reactant gas employed to feed an inventive proton exchange membrane fuel cell is not humidified; or the reactant gas is only humidified to an extent of at most 20 vol.-%, in particular at most 10 vol.-%, based on the total volume of the reactant gas.

Consequently, the availability of proton conducting membranes retaining satisfactory conductivity at high temperature (typically 100-200 °C or more) without humidification (or with minimized humidification) could permit the realization of PEMFC and DMFC which are of special interest for the co-generation stationary power plant application and electric vehicle.

### EXAMPLES

The following examples illustrate the methods and products of the invention. These examples are illustrative only and do not limit the scope of the invention. Throughout the following examples, varying degrees of sulfonation may be achieved, which are typically in a range of from about 45 to about 75 mol.-%. Proton conductivity values typically are obtained in a temperature range of from 100 to 200 °C. Throughout the following examples, varying proton conductivity values may be obtained, which are typically at least about 5x10⁻⁵ S/cm, and which often are in a range of from about 10⁻⁴ to about 5x10⁻³ S/cm.

### Example 1

Partly-sulfonated PBI-PS (polybenzimidazole-propanesultone) is prepared by the formation of a PBI polyanion and the reaction of the PBI anion with the ring-opening reaction of 1,3-propanesultone. The apparatus for the synthesis of PBI-PS consists of four necks round flasks equipped with a dropping funnel and a condenser topped with a CaCl₂ tube. PBI is dissolved in purified DMAc under nitrogen at room temperature. Pulverized LiH is slowly added into the solution and allowed to stir at 85 °C for 3 h. Purified 1,3-propanesultone with calculated feed ratio (calculated by 1 active NH site per one benzimidazole moiety, where the molar ratio of 1,3-propanesultone to benzimidazole moiety is 1.5) is then added. The reaction solution is stirred for 24 h and the resulting polymer is precipitated by pouring it into acetone (800 ml) containing a few drops of hydrochloric acid. The precipitate is collected by filtration and washed with acetone. ps-PBI-PS is identified by elemental analysis, ¹H and ¹³C-NMR, and FT-IR spectroscopy. ps-PBI-PS is dissolved in dimethylsulfoxide (DMSO) and the 5 wt.-% solution is cast on a Teflon disk, followed by evaporating DMSO in vacuum to obtain films. The membrane is heated at 150 °C in air for half an hour. The ps-PBI-PS membrane is then treated in 5 wt.-% H₂O₂ solution and in 1 M H₂SO₄ solution at 80°C for half an hour, respectively. Finally, the membranes are heated in boiling deionized water for half an hour to remove the residual solvent and stabilising salts, and then dried at ambient temperature.

### Example 2

Partly-sulfonated PBI-Bz (polybenzimidazole-methylbenzenesulfonate) is prepared by the formation of a PBI polyanion and the reaction of the PBI anion with the ring-opening reaction of 4-bromomethyl benzenesulfonate. The apparatus for the synthesis of PBI-Bz consists of four necks round flasks equipped with a dropping funnel and a condenser topped with a CaCl₂ tube. PBI is dissolved in purified DMAc under nitrogen at room temperature. Pulverized LiH is slowly added the solution and allowed to stir at 85 °C for 3 h. Purified 4-bromomethyl benzenesulfonate with calculated feed ratio (calculated by 2 active NH site per PBI unit, where the molar ratio is 1.6) is then added. The reaction solution is stirred for 24 h and the resulting polymer is precipitated by pouring it into acetone (800 ml) containing a few drops of hydrochloric acid. The precipitate is collected by filtration and washed with acetone. ps-PBI-Bz is dissolved in N,N-dimethylacetamide (DMAc) and the 5 wt.-% solution is cast on a Teflon disk, followed by evaporating DMAc in vacuum to obtain films. Then the membrane is heated at 150 °C in air for half an hour. The ps-PBI-PS membrane is then treated in 5 wt.-% H₂O₂ solution and in 1 M H₂SO₄ solution at 80°C for half an hour, respectively. Finally, the membranes are heated in boiling deionized water for half an hour to remove the residual solvent and stabilising salts, and then dried at ambient temperature.

### Example 3

Partly-sulfonated PBI-BS (polybenzimidazole-butanesultone) is prepared by the formation of a PBI polyanion and the reaction of the PBI anion with the ring-opening reaction of 1,4-butanesultone. The apparatus for the synthesis of PBI-PS consists of four neck round flasks equipped with a dropping funnel and a condenser topped with a CaCl₂ tube. PBI is dissolved in purified DMAc under nitrogen at room temperature. Pulverized LiH is slowly added to the solution and allowed to stir at 85 °C for 3 h. Purified 1,4-butanesultone with calculated feed ratio (calculated by 2 active NH site per PBI unit, where the molar ratio is 1.5) is then added. The reaction solution is stirred for 24 h and the resulting polymer is precipitated by pouring it into acetone (800 ml) containing a few drops of hydrochloric acid. The precipitate is collected by filtration and washed with acetone. ps-PBI-BS is dissolved in N-methylpyrrolidone (NMP) and the 5 wt.-% solution is cast on a Teflon disk, followed by evaporating DMSO in vacuum to obtain films. Then the membrane is heated at 150 °C in air for half an hour. The ps-PBI-PS membrane is then treated in 5 wt.-% H₂O₂ solution and in 1 M H₂SO₄ solution at 80°C for half an hour, respectively. Finally, the membranes are heated in boiling deionized water for half an hour to remove the residual solvent and stabilising salts, and then dried at ambient temperature.

### Example 4

One example of the copolycondesation of ps-PBI is shown as follows: Poly(phosphoric acid) (PPA) is added into a 100 mL three-necked flask equipped with a mechanical stirring device, a nitrogen inlet and an outlet. The flask is immersed in an oil bath and stirred at 80 °C. A stoichiometric ratio mixture of DAB and DSNDA is charged into the flask under nitrogen flow with stirring, after excluding the residual air from this system by three cycles of vacuum-nitrogen in order to prevent the oxidation of the tetraamine monomer. Then, the reaction mixture is stirred under N₂ at 90 °C for 6 h, successively 130 °C for 5 h, 160 °C for 7 h and 190°C for 5 h. Thus the hot slurry solution is poured into water, and the resulting noodle polymer is filtrated off and dipped in a 5 wt.-% Na₂CO₃ aqueous solution for at least 24 h. Then, the sulfonated polymer in the sodium form (ps-PBINa) is thoroughly rinsed with water and dried under vacuum at 130 °C for 24 h. The obtained ps-PBINa is then dissolved in DMAc. The membrane is prepared by solvent-casting method on a Teflon dish. The membranes are immersed into 5 wt.-% H₂O₂ solution and then into 1 M H₂SO₄ to transform into H⁺ form. Finally, the membranes are heated in boiling deionized water for half an hour to remove the residual solvent and then are dried at ambient temperature.

### Example 5

Poly(phosphoric acid) (PPA) is added into a 100 mL three-necked flask equipped with a mechanical stirring device, a nitrogen inlet and an outlet. The flask is immersed in an oil bath and stirred at 80 °C. A stoichiometric ratio mixture of DAB and SBBA is charged into the flask under nitrogen flow with stirring, after excluding the residual air from this system by three cycles of vacuum-nitrogen in order to prevent the oxidation of the tetraamine monomer. Then, the reaction mixture is stirred under N₂ at 90 °C for 12 h. Thus the hot slurry solution is poured into the water and the resulting noodle polymer is filtrated off and dipped in a 5 wt.-% Na₂CO₃ aqueous solution for at least 24 h. Finally, the sulfonated polymer in the sodium form (ps-PBINa) is thoroughly rinsed with water and dried under vacuum at 130 °C for 24 h. The obtained ps-PBINa is then dissolved in DMSO. The membrane is prepared by solvent-casting method on a Teflon dish. The membranes are immersed into 5 wt.-% H₂O₂ solution and then into 1 M H₂SO₄ to transform into H⁺ form. Finally, the membranes are heated in boiling deionized water for half an hour to remove the residual solvent and then are dried at ambient temperature.

### Example 6

A commercial PBI membrane (with thickness of about 100 µm) is immersed into 2M H₂SO₄ solution at 70 °C for 12 hours, and this process is repeated for 3 times. Then the H₂SO₄-doped PBI membrane is put into a vacuum oven to get rid of the residual water. The H₂SO₄-doped PBI membranes are heated at 470 °C for 3 hours for post-sulfonation. The obtained membrane is put into deionized water before use.

### Example 7

A commercial PBI membrane (with thickness of about 100 µm) is immersed into 2M H₂SO₄ solution at 90 °C for 12 hours, and this process is repeated for 3 times. Then the H₂SO₄-doped PBI membrane is put into a vacuum oven to get rid of the residual water. The H₂SO₄-doped PBI membranes are heated at 470 °C for 3 hours for post-sulfonation. The obtained membranes are immersed into 5 wt.-% H₂O₂ solution and then into 1 M H₂SO₄ to transform into H⁺ form. Finally, the membranes are heated in boiling deionized water for half an hour to remove the residual solvent, and then dried at ambient temperature.

## Claims

1. Use of a proton exchange membrane M in proton exchange membrane fuel cells, in particular in a polymer electrolyte membrane fuel cell or a direct methanol fuel cell, wherein the proton exchange membrane M comprises at least one partly-sulfonated polybenzimidazole polymer ps-PBI which comprises, in polymerized form, at least 90 mol-% monomeric units U of formula (I) and/or (II), based on the total amount of monomeric units in the partly-sulfonated polybenzimidazole polymer ps-PBI, 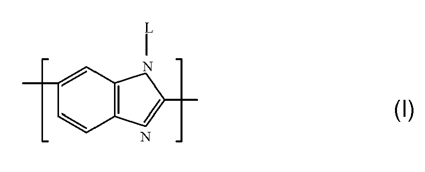 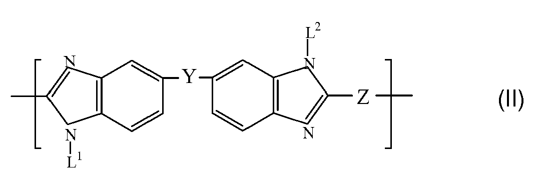 wherein L, L¹ and L² are selected independently for each of the monomeric units U and are selected, independently from one another, from the group consisting of hydrogen and -A-SO₃H, wherein
A is selected from the group consisting of divalent C₁-C₁₀ alkanediyl; divalent C₁-C₁₀ fluoroalkanediyl; and divalent C₇-C₁₅ arylalkyl; wherein A preferably is selected from the group consisting of divalent linear C₁-C₁₀ alkanediyl; divalent linear C₁-C₁₀ fluoroalkane; and divalent C₇-C₁₂ arylalkyl;
Y is selected from the group consisting of O and S, or Y is a single carbon-carbon bond;
Z is selected from the group consisting of divalent C₁-C₁₀ alkanediyl; divalent C₂-C₁₀ alkenediyl; divalent C₆-C₁₅ aryl; divalent C₅-C₁₅ heteroaryl; divalent C₅-C₁₅ heterocyclyl; divalent C₆-C₁₉ aryl sulfone; and divalent C₆-C₁₉ aryl ether; wherein Z preferably is selected from the group consisting of divalent C₄-C₈ alkanediyl; divalent C₂-C₄ alkenediyl; divalent C₆-C₁₂ aryl; divalent C₅-C₁₂ heteroaryl; divalent C₅-C₁₂ heterocyclyl; divalent C₆-C₁₂ aryl sulfone; divalent C₆-C₁₂ aryl ether; and
wherein the total amount of monomeric units U in the partly-sulfonated polybenzimidazole polymer ps-PBI is from about 100 to about 10,000;
wherein from about 40 to about 85 mol-% of L, L¹ and L², based on the total amount of L, L¹ and L², is a moiety -A-SO₃H; and
**characterized in that** the membrane M is essentially free of water and exhibits a proton conductivity at a temperature of 100 °C or more, preferably in the range of from 100 to 250 °C, of at least 10⁻⁵ S/cm, as measured by impedance method,
wherein the proton exchange membrane fuel cell is operated at a temperature of 100 °C or more, preferably in the range of from 100 to 250 °C, under conditions where the proton exchange membrane M is essentially free of water, and
wherein the membrane M has a water content of 10 wt.-% or less, based on the total weight of the membrane M.

2. Use of a membrane M according to claim 1, wherein the partly-sulfonated polybenzimidazole polymer ps-PBI comprises, in polymerized form, at least 90 mol-% monomeric units U of formula (I), based on the total amount of monomeric units in the partly-sulfonated polybenzimidazole polymer ps-PBI, wherein the monomeric units U of formula (I) may be linked to one another by a moiety Y or Z, as defined in claim 1.

3. Use of a membrane M according to claim 1, wherein the partly-sulfonated polybenzimidazole polymer ps-PBI comprises, in polymerized form, at least 90 mol-% monomeric units U of formula (II), based on the total amount of monomeric units in the partly-sulfonated polybenzimidazole polymer ps-PBI.

4. Use of a membrane M according to claim 3, wherein in at least 80 mol-% of the monomeric units U of formula (II), based on the total amount of the monomeric units U of formula (II), at least one of L¹ and L² is hydrogen; and preferably one of L¹ and L² is hydrogen and the other is a moiety -A-SO₃H.

5. Use of a membrane M according to any of the preceding claims, wherein the partly-sulfonated polybenzimidazole polymer ps-PBI is selected from the group consisting of poly-2,2'-(m-phenylene)-5,5'-bibenzimidazole; poly-2,2'-(pyridylene-3",5")-bibenzimidazole; poly-2,2'-(furylene-2",5")-5,5'-bibenzimidazole; poly-2,2'-(naphthalene-1",6")-5,5'-bibenzimidazole; poly-2,2'-(biphenylene-4",4")-5,5'-bibenzimidazole; poly-2,2'-amylene-5,5'-bibenzimidazole; poly-2,2'-octamethylene-5,5'-bibenzimidazole; poly-2,6'-(m-phenylene)-diimidazobenzene; poly-(1-(4,4-diphenylether)-5-oxybenzimidazole)-benzimidazole; poly-(1-(2-pyridine)-5-oxybenzimidazole)-benzimidazole; poly-(3-(4-(6-(1-benzimidazol-5-yloxy)-1-benzimidazol-2-yl)phenyl)-3-phenylisobenzofuran-1(3H)-one) and poly(2,5-benzimidazole).

6. Use of a membrane M according to any of the preceding claims, wherein the membrane M has a thickness in the range of from about 20 to about 200 µm under conditions where the membrane M is essentially free of water.

7. Use of a membrane M according to any of the preceding claims, wherein the membrane M has a water content of 5 wt.-% or less, based on the total weight of the membrane M.

8. Use of a membrane M as defined in any of claims 1 to 7, wherein the membrane M is obtained by a method for the production of a proton exchange membrane comprising the following steps:
(i) providing a solution S of a polybenzimidazole polymer PBI in an organic solvent OS which is essentially free of water;
(ii) adding to the solution S obtained in step (i) an alkali hydride AH, whereby a polybenzimidazole polyanion PBI-PA having a plurality of anionic imidazole nitrogen functionalities is obtained;
(iii) reacting the polybenzimidazole polyanion PBI-PA obtained in step (ii) with a compound C, wherein the compound C comprises at least one sulfonate moiety SM, or at least one moiety CM which can be converted into a sulfonate moiety, and obtaining a reaction product RP by precipitation from the reaction mixture; wherein the compound C preferably is selected from the group consisting of sultones having from 1 to 10 carbon atoms as chain members; and C₇-C₁₅ arylalkyl sulfonates, the sulfonates carrying a halogen substituent X which can react with an alkali ion of the alkali hydride AH employed in step (ii);
(iv) dissolving the reaction product RP obtained in step (iii) in an aprotic organic solvent OS1, applying the solution thus obtained onto a substrate SB, preferably a flat substrate, and forming a membrane film MF by evaporating the solvent OS1;
(v) treating the membrane film MF obtained in step (iv) with an oxidizing agent, such as H₂O₂, and subsequently with an inorganic acid, such as H₂SO₄, preferably in each case at an elevated temperature, whereby a membrane film MF1 is obtained;
(vi) optionally, treating the membrane film MF1 obtained in step (v) with a purified solvent, preferably purified H₂O, at an elevated temperature; and
(vii) drying the membrane film MF1 obtained in step (v) or (vi), respectively, whereby a membrane M is obtained.

9. Use according to claim 8, wherein an amount of the compound C is employed in step (iii) which is more than the stoichiometric equivalent of the anionic imidazole nitrogen functionalities of the polybenzimidazole anion PBI-PA obtained in step (ii).

10. Use of a membrane M as defined in any of claims 1 to 7, wherein the membrane M is obtained by a method for the production of a proton exchange membrane comprising the following steps:
(i') providing a mixture of an aromatic bis-o-diamine AD and a sulfonated dicarboxylate SD, respectively, in a poly(phosphoric acid) PPA; whereby a reaction mixture RM is obtained; wherein AD preferably is 3,3'-diaminobenzidine, and/or wherein SD preferably is selected from the group comprising 2-sulfonic-1,4-2-benzenecarboxylic acid; 4,8-disulfonyl-2,6-naphthalenedicarboxylic acid, 4,4'-dicarboxydiphenyl ether-2,2'-disulfonic acid disodium salt; 4,4'-sulfonyldibenzoic acid; and 5-sulfoisophthalic acid monosodium salt; and
(ii') copolymerizing the aromatic bis-o-diamine AD and the sulfonated dicarboxylate SD in the reaction mixture RM of step (i'), whereby a reaction product RP' is obtained.
(iii') separating the reaction product RP' obtained in step (ii') from the reaction mixture RM, and treating the reaction product RP' with an aqueous alkali or earth alkali solution, whereby an (earth) alkali substituted reaction product AS-RP' is obtained;
(iv') dissolving the (earth) alkali substituted reaction product AS-RP' obtained in step (iii') in an aprotic organic solvent OS2, applying the solution thus obtained onto a substrate SB', preferably a flat substrate, and forming a membrane film MF' by evaporating the solvent OS2;
(v') treating the membrane film MF' obtained in step (iv') subsequently with an oxidizing agent, such as H₂O₂, with an inorganic acid, such as H₂SO₄, and with a purified solvent, preferably purified H₂O, preferably at an elevated temperature, whereby a membrane film MF1' is obtained; and
(vi') drying the membrane film MF1' obtained in step (v'), whereby a membrane M is obtained.

11. Use according to claim 10, wherein in step (i) an essentially stoichiometric mixture of the aromatic bis-o-diamine AD and the sulfonated dicarboxylate SD, respectively, is provided in the poly(phosphoric acid) PPA.

12. Use of a membrane M as defined in any of claims 1 to 7, wherein the membrane M is obtained by a method for the production of a proton exchange membrane comprising the following steps:
(i") providing a reaction mixture RM' by immersing a dry polybenzimidazole polymer PBI membrane into a sulfuric acid solution;
(ii") heating the reaction mixture RM' obtained in step (i"), optionally under vacuum, to a temperature of at least 70 °C, preferably in the range of from 70 to 120 °C, such that essentially all solvents are evaporated from the reaction mixture RM', whereby a precursor membrane PM is obtained;
(iii") heating the precursor membrane PM obtained in step (ii") to a temperature of at least 400 °C for a time period of from 0.5 to 20 h, whereby a membrane film MF' is obtained;
(iv") treating the membrane film MF' obtained in step (iii") subsequently with an oxidizing agent, such as H₂O₂, with an inorganic acid, such as H₂SO₄, and with a purified solvent, preferably purified H₂O, preferably at an elevated temperature, whereby a membrane film MF1' is obtained; and
(v") drying the membrane film MF1' obtained in step (iv"), whereby a membrane M is obtained.

13. Use according to any of claims 1 to 7 or 9 to 12, wherein the proton exchange membrane fuel cell is operated with reactant gas where the reactant gas has a degree of humidification of at most 20 vol.-%, in particular at most 10 vol.-%, based on the total volume of the reactant gas, and preferably wherein the proton exchange membrane fuel cell is operated without humidification of the reactant gas.

## Patentansprüche

1. Verwendung einer Protonenaustauschmembran M in Protonenaustauschmembran-Brennstoffzellen, insbesondere in einer Polymerelektrolytmembran-Brennstoffzelle oder einer Direkt-Methanol-Brennstoffzelle, wobei die Protonenaustauschmembran M mindestens ein teil-sulfoniertes Polybenzimidazol-Polymer ps-PBI umfasst, welches mindestens 90 mol-% Monomer-Einheiten U der Formel (I) und/oder (II), bezogen auf die Gesamtmenge an Monomer-Einheiten in dem teil-sulfonierten Polybenzimidazol-Polymer ps-PBI, in polymerisierter Form umfasst 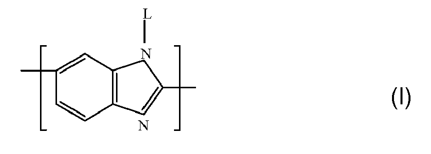 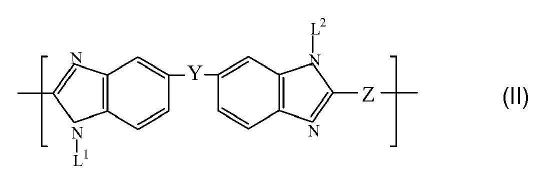 wobei L, L¹ und L² für jede der Monomer-Einheiten U unabhängig ausgewählt sind und, unabhängig voneinander, aus der Gruppe bestehend aus Wasserstoff und -A-SO₃H ausgewählt sind, wobei
A ausgewählt ist aus der Gruppe bestehend aus divalentem C₁-C₁₀-Alkandiyl; divalentem C₁-C₁₀-Fluoralkandlyl; und divalentem C₇-C₁₅-Arylalkyl; wobei A bevorzugt ausgewählt ist aus der Gruppe bestehend aus divalentem linearen C₁-C₁₀-Alkandiyl; divalentem linearen C₁-C₁₀-Fluoralkan; und divalentem C₇-C₁₂-Arylalkyl;
Y ausgewählt ist aus der Gruppe bestehend aus O und S, oder Y ist eine Kohlenstoff-Kohlenstoff-Einfachbindung;
Z ausgewählt ist aus der Gruppe bestehend aus divalentem C₁-C₁₀-Alkandiyl; divalentem C₂-C₁₀-Alkendiyl; divalentem C₆-C₁₅-Aryl; divalentem C₅-C₁₅-Heteroaryl; divalentem C₅-C₁₅-Heterocyclyl; divalentem C₆-C₁₉-Arylsulfon; und divalentem C₆-C₁₉-Arylether; wobei Z bevorzugt ausgewählt ist aus der Gruppe bestehend aus divalentem C₄-C₈-Alkandiyl; divalentem C₂-C₄-Alkendiyl; divalentem C₆-C₁₂-Aryl; divalentem C₅-C₁₂-Heteroaryl; divalentem C₅-C₁₂-Heterocyclyl; divalentem C₆-C₁₂-Arylsulfon; divalentem C₆-C₁₂-Arylether; und
wobei die Gesamtmenge an Monomer-Einheiten U in dem teil-sulfonierten Polybenzimidazol-Polymer ps-PBI ungefähr 100 bis ungefähr 10,000 beträgt;
wobei ungefähr 40 bis ungefähr 85 mol-% L, L¹ und L², bezogen auf die Gesamtmenge an L, L¹ und L², ein Rest -A-SO₃H sind; und
**dadurch gekennzeichnet, dass** die Membran M im Wesentlichen frei von Wasser ist und eine Protonenleitfähigkeit bei einer Temperatur von 100 °C oder mehr, bevorzugt im Bereich von 100 bis 250 °C, von mindestens 10⁻⁵ S/cm aufweist, gemessen mittels Impedanzverfahren,
wobei die Protonenaustauschmembran-Brennstoffzelle bei einer Temperatur von 100 °C oder mehr, bevorzugt im Bereich von 100 bis 250 °C, unter Bedingungen, bei denen die Protonenaustauschmembran M im Wesentlichen frei von Wasser ist, betrieben wird, und
wobei die Membran M einen Wassergehalt von 10 Gew.-% oder weniger, bezogen auf das Gesamtgewicht der Membran M, aufweist.

2. Verwendung einer Membran M nach Anspruch 1, wobei das teil-sulfonierte Polybenzimidazol-Polymer ps-PBI mindestens 90 mol-% Monomer-Einheiten U der Formel (I), bezogen auf die Gesamtmenge an Monomer-Einheiten in dem teil-sulfonierten Polybenzimidazol-Polymer ps-PBI, in polymerisierter Form umfasst, wobei die Monomer-Einheiten U der Formel (I) durch einen Rest Y oder Z, wie in Anspruch 1 definiert, miteinander verbunden sein können.

3. Verwendung einer Membran M nach Anspruch 1, wobei das teil-sulfonierte Polybenzimidazol-Polymer ps-PBI mindestens 90 mol-% Monomer-Einheiten U der Formel (II), bezogen auf die Gesamtmenge an Monomer-Einheiten in dem teil-sulfonierten Polybenzimidazol-Polymer ps-PBI, in polymerisierter Form umfasst.

4. Verwendung einer Membran M nach Anspruch 3, wobei in mindestens 80 mol-% der Monomer-Einheiten U der Formel (II), bezogen auf die Gesamtmenge der Monomer-Einheiten U der Formel (II), mindestens eins von L¹ und L² Wasserstoff ist; und wobei bevorzugt eins von L¹ und L² Wasserstoff ist und das andere ein Rest -A-SO₃H ist.

5. Verwendung einer Membran M nach einem der vorhergehenden Ansprüche, wobei das teil-sulfonierte Polybenzimidazol-Polymer ps-PBI ausgewählt ist aus der Gruppe bestehend aus Poly-2,2'-(m-phenylen)-5,5'-bibenzimidazol; Poly-2,2'-(pyridylen-3",5")-bibenzimidazol; Poly-2,2'-(furylen-2",5")-5,5'-bibenzimidazol; Poly-2,2'-(naphthalen-1",6")-5,5'-bibenzimidazol; Poly-2,2'-(biphenylen-4",4")-5,5'-bibenzimidazol; Poly-2,2'-amylen-5,5'-bibenzimidazol; Poly-2,2'-octamethylen-5,5'-bibenzimidazol; Poly-2,6'-(m-phenylen)-diimidazobenzen; Poly-(1-(4,4-diphenylether)-5-oxybenzimidazol)-benzimidazol; Poly-(1-(2-pyridin)-5-oxybenzimidazol)-benzimidazol; Poly-(3-(4-(6-(1-benzimidazol-5-yloxy)-1-benzimidazol-2-yl)phenyl)-3-phenylisobenzofuran-1 (3H)-on) und Poly(2,5-benzimidazol).

6. Verwendung einer Membran M nach einem der vorhergehenden Ansprüche, wobei die Membran M unter Bedingungen, bei denen die Membran M im Wesentlichen frei von Wasser ist, eine Dicke im Bereich von ungefähr 20 bis ungefähr 200 µm aufweist.

7. Verwendung einer Membran M nach einem der vorhergehenden Ansprüche, wobei die Membran M einen Wassergehalt von 5 Gew.-% oder weniger, bezogen auf das Gesamtgewicht der Membran M, aufweist.

8. Verwendung einer Membran M, wie in einem der Ansprüche 1 bis 7 definiert, wobei die Membran M durch ein Herstellungsverfahren für eine Protonenaustauschmembran erhalten wird, das die folgenden Schritte umfasst:
(i) Bereitstellen einer Lösung S eines Polybenzimidazol-Polymers PBI in einem organischen Lösungsmittel OS, welches im Wesentlichen frei von Wasser ist;
(ii) Hinzufügen eines Alkalihydrids AH zu der in Schritt (i) erhaltenen Lösung S, wobei ein Polybenzimidazol-Polyanion PBI-PA mit einer Vielzahl von anionischen Imidazolstickstoff-Funktionalitäten erhalten wird;
(iii) Umsetzen des in Schritt (ii) erhaltenen Polybenzimidazol-Polyanions PBI-PA mit einer Verbindung C, wobei die Verbindung C mindestens einen Sulfonatrest SM, oder mindestens einen Rest CM, der in einen Sulfonatrest umgewandelt werden kann, umfasst, und Erhalten eines Reaktionsprodukts RP aus der Reaktionsmischung mittels Präzipitation; wobei die Verbindung C bevorzugt ausgewählt ist aus der Gruppe bestehend aus Sultonen mit 1 bis 10 Kohlenstoffatomen als Kettenglieder; und C₇-C₁₅-Arylalkylsulfonaten, wobei die Sulfonate einen Halogensubstituenten X tragen, der mit einem Alkaliion des in Schritt (ii) eingesetzten Alkalihydrids AH reagieren kann;
(iv) Lösen des in Schritt (iii) erhaltenen Reaktionsprodukts RP in einem aprotischen organischen Lösungsmittel OS1, Auftragen der so erhaltenen Lösung auf ein Substrat SB, bevorzugt ein flaches Substrat, und Bilden einer Membranschicht MF durch Evaporation des Lösungsmittels OS1;
(v) Behandeln der in Schritt (iv) erhaltenen Membranschicht MF mit einem oxidierenden Agens, wie H₂O₂, und anschließend mit einer anorganischen Säure, wie H₂SO₄, jeweils bevorzugt bei einer erhöhten Temperatur, wodurch eine Membranschicht MF1 erhalten wird;
(vi) optional Behandeln der in Schritt (v) erhaltenen Membranschicht MF1 mit einem aufgereinigten Lösungsmittel, bevorzugt aufgereinigtem H₂O, bei einer erhöhten Temperatur; und
(vii) Trocknen der in Schritt (v) beziehungsweise (vi) erhaltenen Membranschicht MF1, wobei eine Membran M erhalten wird.

9. Verwendung nach Anspruch 8, wobei in Schritt (iii) eine Menge der Verbindung C eingesetzt wird, die mehr als dem stöchiometrischen Äquivalent der anionischen Imidazolstickstoff-Funktionalitäten des in Schritt (ii) erhaltenen Polybenzimidazolanions PBI-PA entspricht.

10. Verwendung einer Membran M, wie in einem der Ansprüche 1 bis 7 definiert, wobei die Membran M durch ein Herstellungsverfahren für eine Protonenaustauschmembran erhalten wird, das die folgenden Schritte umfasst:
(i') Bereitstellen einer Mischung eines aromatischen bis-o-Diamins AD beziehungsweise eines sulfonierten Dicarboxylats SD in einer Polyphosphorsäure PPA; wodurch eine Reaktionsmischung RM erhalten wird; wobei AD bevorzugt 3,3'-Diaminobenzidin ist, und/oder wobei SD bevorzugt ausgewählt ist aus der Gruppe enthaltend 2-Sulfon-1,4-2-benzencarbonsäure; 4,8-Disulfonyl-2,6-naphthalendicarbonsäure, 4,4'-Dicarboxydiphenylether-2,2'-disulfonsäuredinatriumsalz; 4,4'-Sulfonyldibenzoesäure; und 5-Sulfoisophthalsäuremononatriumsalz; und
(ii') Copolymerisieren des aromatischen bis-o-Diamins AD und des sulfonierten Dicarboxylats SD in der Reaktionsmischung RM aus Schritt (i'), wodurch ein Reaktionsprodukt RP' erhalten wird,
(iii') Trennen des in Schritt (ii') erhaltenen Reaktionsprodukts RP' von der Reaktionsmischung RM, und Behandeln des Reaktionsprodukts RP' mit einer wässrigen Alkali- oder Erdalkali-Lösung, wodurch ein (Erd-)Alkalisubstituiertes Reaktionsprodukt AS-RP' erhalten wird;
(iv') Lösen des in Schritt (iii') erhaltenen (Erd-)Alkali-substituierten Reaktionsprodukts AS-RP' in einem aprotischen organischen Lösungsmittel OS2, Auftragen der so erhaltenen Lösung auf ein Substrat SB', bevorzugt ein flaches Substrat, und Bilden einer Membranschicht MF' durch Evaporation des Lösungsmittels OS2;
(v') auf einander folgendes Behandeln der in Schritt (iv') erhaltenen Membranschicht MF' mit einem oxidierenden Agens, wie H₂O₂, mit einer anorganischen Säure, wie H₂SO₄, und mit einem aufgereinigten Lösungsmittel, bevorzugt aufgereinigtem H₂O, bevorzugt bei erhöhter Temperatur, wodurch eine Membranschicht MF1' erhalten wird; und
(vi') Trocknen der in Schritt (v') erhaltenen Membranschicht MF1', wodurch eine Membran M erhalten wird.

11. Verwendung nach Anspruch 10, wobei in Schritt (i) eine im Wesentlichen stöchiometrische Mischung des aromatischen bis-o-Diamins AD beziehungsweise des sulfonierten Dicarboxylats SD in der Polyphosphorsäure PPA verwendet wird.

12. Verwendung einer Membran M, wie in einem der Ansprüche 1 bis 7 definiert, wobei die Membran M durch ein Herstellungsverfahren für eine Protonenaustauschmembran erhalten wird, das die folgenden Schritte umfasst:
(i") Bereitstellen einer Reaktionsmischung RM', indem eine trockene Polybenzimidazol-Polymer(PBI)-Membran in eine Schwefelsäure-Lösung eingebracht wird;
(ii") Erhitzen der in Schritt (i") erhaltenen Reaktionsmischung RM', optional unter Vakuum, auf eine Temperatur von mindestens 70 °C, bevorzugt im Bereich von 70 bis 120 °C, so dass im Wesentlichen alle Lösungsmittel aus der Reaktionsmischung RM' evaporiert werden, wodurch eine Vorläufer-Membran PM erhalten wird;
(iii") Erhitzen der in Schritt (ii") erhaltenen Vorläufer-Membran PM auf eine Temperatur von mindestens 400 °C für einen Zeitraum von 0,5 bis 20 h, wodurch eine Membranschicht MF' erhalten wird;
(iv") auf einander folgendes Behandeln der in Schritt (iii") erhaltenen Membranschicht MF' mit einem oxidierenden Agens, wie H₂O₂, mit einer anorganischen Säure, wie H₂SO₄, und mit einem aufgereinigten Lösungsmittel, bevorzugt aufgereinigtem H₂O, bevorzugt bei einer erhöhten Temperatur, wodurch eine Membranschicht MF1' erhalten wird; und
(v") Trocknen der in Schritt (iv") erhaltenen Membranschicht MF1', wodurch eine Membran M erhalten wird.

13. Verwendung nach einem der Ansprüche 1 bis 7 oder 9 bis 12, wobei die Protonenaustauschmembran-Brennstoffzelle mit Reaktionsgas betrieben wird, wobei das Reaktionsgas einen Befeuchtungsgrad von höchstens 20 Vol.-%, insbesondere höchstens 10 Vol.-%, bezogen auf das Gesamtvolumen des Reaktionsgases, aufweist, und wobei die Protonenaustauschmembran-Brennstoffzelle bevorzugt ohne Befeuchtung des Reaktionsgases betrieben wird.

## Revendications

1. Utilisation d'une membrane échangeuse de protons M dans des piles à combustible à membrane échangeuse de protons, en particulier dans une pile à combustible à membrane électrolytique polymère ou une pile à combustible à méthanol direct, la membrane échangeuse de protons M comprenant au moins un polymère de polybenzimidazole partiellement sulfoné ps-PBI qui comprend, sous forme polymérisée, au moins 90 % en moles de motifs monomères U de formule (I) et/ou (II), rapporté à la quantité totale de motifs monomères dans le polymère de polybenzimidazole partiellement sulfoné ps-PBI, 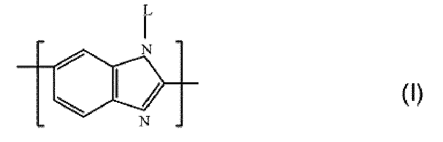 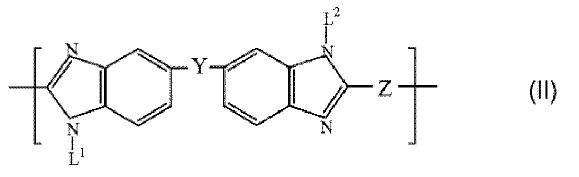
dans laquelle L, L¹ et L² sont choisis indépendamment pour chacun des motifs monomères U et sont choisis, indépendamment les uns des autres, dans le groupe constitué par l'hydrogène et -A-SO₃H, dans laquelle
A est choisi dans le groupe constitué par un alcane-diyle en C₁-C₁₀ divalent ; un fluoroalcanediyle en C₁-C₁₀ divalent ; et un arylalkyle en C₇-C₁₅ divalent ; A étant de préférence choisi dans le groupe constitué par un alcanediyle en C₁-C₁₀ divalent linéaire ; un fluoroalcane en C₁-C₁₀ divalent linéaire ; et un arylalkyle en C₇-C₁₂ divalent ;
Y est choisi dans le groupe constitué par 0 et S, ou Y est une unique liaison carbone-carbone ;
Z est choisi dans le groupe constitué par un alcanediyle en C₁-C₁₀ divalent ; un alcènediyle en C₂-C₁₀ divalent ; un aryle en C₆-C₁₅ divalent ; un hétéroaryle en C₅-C₁₅ divalent ; un hétérocyclyle en C₅-C₁₅ divalent ; une arylsulfone en C₆-C₁₉ divalente ; et un éther d'aryle en C₆-C₁₉ divalent ; Z étant de préférence choisi dans le groupe constitué par un alcanediyle en C₄-C₈ divalent ; un alcènediyle en C₂-C₄ divalent ; un aryle en C₆-C₁₂ divalent ; un hétéroaryle en C₅-C₁₂ divalent ; un hétérocyclyle en C₅-C₁₂ divalent ; une arylsulfone en C₆-C₁₂ divalente ; un éther d'aryle en C₆-C₁₂ divalent ; et
dans laquelle la quantité totale de motifs monomères U dans le polymère de polybenzimidazole partiellement sulfoné ps-PBI est d'environ 100 à environ 10 000 ;
dans laquelle environ 40 à environ 85 % en moles de L, L¹ et L², rapporté à la quantité totale de L, L¹ et L², sont une fraction -A-SO₃H ; et
**caractérisée en ce que** la membrane M est essentiellement dépourvue d'eau et présente une conductivité protonique à une température de 100 °C ou plus, de préférence dans la fourchette de 100 à 250 °C, d'au moins 10⁻⁵ S/cm, telle que mesurée par la méthode de l'impédance,
dans laquelle on fait fonctionner la pile à combustible à membrane échangeuse de protons à une température de 100 °C ou plus, de préférence dans la fourchette de 100 à 250 °C, dans des conditions où la membrane échangeuse de protons M est essentiellement dépourvue d'eau, et
dans laquelle la membrane M a une teneur en eau de 10 % en poids ou moins, rapporté au poids total de la membrane M.

2. Utilisation d'une membrane M selon la revendication 1, dans laquelle le polymère de polybenzimidazole partiellement sulfoné ps-PBI comprend, sous forme polymérisée, au moins 90 % en moles de motifs monomères U de formule (I), rapporté à la quantité totale de motifs monomères dans le polymère de polybenzimidazole partiellement sulfoné ps-PBI, les motifs monomères U de formule (I) pouvant être liés les uns aux autres par une fraction Y ou Z, telle que définie dans la revendication 1.

3. Utilisation d'une membrane M selon la revendication 1, dans laquelle le polymère de polybenzimidazole partiellement sulfoné ps-PBI comprend, sous forme polymérisée, au moins 90 % en moles de motifs monomères U de formule (II), rapporté à la quantité totale de motifs monomères dans le polymère de polybenzimidazole partiellement sulfoné ps-PBI.

4. Utilisation d'une membrane M selon la revendication 3, dans laquelle dans au moins 80 % en moles des motifs monomères U de formule (II), rapporté à la quantité totale des motifs monomères U de formule (II), au moins un de L¹ et L² est un hydrogène ; et de préférence un de L¹ et L² est un hydrogène et l'autre est une fraction -A-SO₃H.

5. Utilisation d'une membrane M selon l'une quelconque des revendications précédentes, dans laquelle le polymère de polybenzimidazole partiellement sulfoné ps-PBI est choisi dans le groupe constitué par le poly-2,2'-(m-phénylène)-5,5'-bibenzimidazole ; le poly-2,2'-(pyridylène-3",5")-bibenzimidazole ; le poly-2,2'-(furylène-2",5")-5,5'-bibenzimidazole ; le poly-2,2'-(naphtalène-1",6")-5,5'-bibenzimidazole ; le poly-2,2'-(biphénylène-4",4")-5,5'-bibenzimidazole ; le poly-2,2"-amylène-5,5'-bibenzimidazole ; le poly-2,2'-octaméthylène-5,5'-bibenzimidazole ; le poly-2,6"-(m-phénylène)-diimidazobenzène ; le poly-(1-(4,4-diphényléther)-5-oxybenzimidazole)-benzimidazole ; le poly-(1-(2-pyridine)-5-oxybenzimidazole)-benzimidazole ; la poly-(3-(4-(6-(1-benzimidazol-5-yloxy)-1-benzimidazol-2-yl)phényl)-3-phénylisobenzofuran-1(3H)-one) ; et le poly(2,5-benzimidazole).

6. Utilisation d'une membrane M selon l'une quelconque des revendications précédentes, dans laquelle la membrane M a une épaisseur dans la fourchette d'environ 20 à environ 200 µm dans des conditions où la membrane M est essentiellement dépourvue d'eau.

7. Utilisation d'une membrane M selon l'une quelconque des revendications précédentes, dans laquelle la membrane M a une teneur en eau de 5 % en poids ou moins, rapporté au poids total de la membrane M.

8. Utilisation d'une membrane M selon l'une quelconque des revendications 1 à 7, dans laquelle la membrane M est obtenue par un procédé de production d'une membrane échangeuse de protons comprenant les étapes suivantes :
(i) se procurer une solution S d'un polymère de polybenzimidazole PBI dans un solvant organique OS qui est essentiellement dépourvu d'eau ;
(ii) ajouter à la solution S obtenue à l'étape (i) un hydrure alcalin AH, un polyanion de polybenzimidazole PBI-PA ayant une pluralité de fonctionnalités azote d'imidazole anioniques étant ainsi obtenu ;
(iii) faire réagir le polyanion de polybenzimidazole PBI-PA obtenu à l'étape (ii) avec un composé C, le composé C comprenant au moins une fraction sulfonate SM, ou au moins une fraction CM qui peut être transformée en une fraction sulfonate, et obtenir un produit de réaction RP par précipitation à partir du mélange réactionnel ; le composé C étant de préférence choisi dans le groupe constitué par les sulfones ayant de 1 à 10 atomes de carbone comme éléments de la chaîne ; et les sulfonates d'arylalkyle en C₇-C₁₅, les sulfonates portant un substituant halogène X qui peut réagir avec un ion alcalin de l'hydrure alcalin AH employé à l'étape (ii) ;
(iv) dissoudre le produit de réaction RP obtenu à l'étape (iii) dans un solvant organique aprotique OS1, appliquer la solution ainsi obtenue sur un substrat SB, de préférence un substrat plat, et former un film de membrane MF en évaporant le solvant OS1 ;
(v) traiter le film de membrane MF obtenu à l'étape (iv) avec un oxydant, tel que H₂O₂, et par la suite avec un acide inorganique, tel que H₂SO₄, de préférence dans chaque cas à une température élevée, un film de membrane MF1 étant ainsi obtenu ;
(vi) éventuellement, traiter le film de membrane MF1 obtenu à l'étape (v) avec un solvant purifié, de préférence H₂O purifié, à une température élevée ; et
(vii) sécher le film de membrane MF1 obtenu à l'étape (v) ou (vi), respectivement, une membrane M étant ainsi obtenue.

9. Utilisation selon la revendication 8, dans laquelle on emploie à l'étape (iii) une quantité du composé C qui est supérieure à l'équivalent stoechiométrique des fonctionnalités azote d'imidazole anioniques de l'anion de polybenzimidazole PBI-PA obtenu à l'étape (ii).

10. Utilisation d'une membrane M telle que définie dans l'une quelconque des revendications 1 à 7, la membrane M étant obtenue par un procédé de production d'une membrane échangeuse de protons comprenant les étapes suivantes :
(i') se procurer un mélange d'une bis-o-diamine aromatique AD et d'un dicarboxylate sulfoné SD, respectivement, dans un poly(acide phosphorique) PPA ; un mélange réactionnel RM étant ainsi obtenu ; AD étant de préférence la 3,3'-diaminobenzidine, et/ou SD étant de préférence choisi dans le groupe comprenant l'acide 2-sulfonique-1,4-2-benzènecarboxylique ; 1"acide 4,8-disulfonyl-2,6-naphtalènedicarboxylique ; le sel disodique d'acide 4,4'-dicarboxydiphényléther-2,2'-disulfonique ; l'acide 4,4'-sulfonyldibenzoïque ; et le sel monosodique d'acide 5-sulfoisophtalique ; et
(ii') copolymériser la bis-o-diamine aromatique AD et le dicarboxylate sulfoné SD dans le mélange réactionnel RM de l'étape (i'), un produit de réaction RP' étant ainsi obtenu ;
(iii') séparer le produit de réaction RP' obtenu à l'étape (ii') du mélange réactionnel RM, et traiter le produit de réaction RP' avec une solution aqueuse alcaline ou alcalino-terreuse, un produit de réaction à substitution alcaline (alcalino-terreuse) AS-RP' étant ainsi obtenu ;
(iv') dissoudre le produit de réaction à substitution alcaline (alcalino-terreuse) AS-RP' obtenu à l'étape (iii') dans un solvant organique aprotique OS2, appliquer la solution ainsi obtenue sur un substrat SB', de préférence un substrat plat, et former un film de membrane MF' en évaporant le solvant OS2 ;
(v') traiter le film de membrane MF' obtenu à l'étape (iv') successivement avec un oxydant, tel que H₂O₂, avec un acide inorganique, tel que H₂SO₄, et avec un solvant purifié, de préférence H₂O purifié, de préférence à une température élevée, un film de membrane MF1' étant ainsi obtenu ; et
(vi') sécher le film de membrane MF1' obtenu à l'étape (v'), une membrane M étant ainsi obtenue.

11. Utilisation selon la revendication 10 dans laquelle, à l'étape (i'), un mélange essentiellement stoechiométrique de la bis-o-diamine aromatique AD et du dicarboxylate sulfoné SD, respectivement, est obtenu dans le poly(acide phosphorique) PPA.

12. Utilisation d'une membrane M telle que définie dans l'une quelconque des revendications 1 à 7, la membrane M étant obtenue par un procédé de production d'une membrane échangeuse de protons comprenant les étapes suivantes :
(i") obtenir un mélange réactionnel RM' en plongeant une membrane de polymère de polybenzimidazole PBI sèche dans une solution d'acide sulfurique ;
(ii") chauffer le mélange réactionnel RM' obtenu à l'étape (i"), éventuellement sous vide, jusqu'à une température d'au moins 70 °C, de préférence dans la fourchette de 70 à 120 °C, de telle sorte qu'essentiellement tous les solvants soient évaporés du mélange réactionnel RM', une membrane précurseur PM étant ainsi obtenue ;
(iii") chauffer la membrane précurseur PM obtenue à l'étape (ii") jusqu'à une température d'au moins 400 °C pendant un laps de temps de 0,5 à 20 h, un film de membrane MF' étant ainsi obtenu ;
(iv") traiter le film de membrane MF' obtenu à l'étape (iii") successivement avec un oxydant, tel que H₂O₂, avec un acide inorganique, tel que H₂SO₄, et avec un solvant purifié, de préférence H₂O purifié, de préférence à une température élevée, un film de membrane MF1' étant ainsi obtenu ; et
(v") sécher le film de membrane MF1' obtenu à l'étape (iv"), une membrane M étant ainsi obtenue.

13. Utilisation selon l'une quelconque des revendications 1 à 7 ou 9 à 12, dans laquelle on fait fonctionner la pile à combustible à membrane échangeuse de protons avec un gaz réactif, le gaz réactif ayant un degré d'humidification de 20 % en volume maximum, en particulier 10 % en volume maximum, rapporté au volume total du gaz réactif, et de préférence dans laquelle on fait fonctionner la pile à combustible à membrane échangeuse de protons sans humidification du gaz réactif.
